# EUROPEAN PATENT APPLICATION

(11) **EP 4 822 413 A1**
(43) Date of publication of application: **14.10.2026**
(21) Application number: 25382349.6
(22) Date of filing: 07.04.2025
(51) Int. Cl.: G02B 6/42

(54) **SURFACE-MOUNTABLE INTEGRATED OPTICAL TRANSCEIVER**

(71) Applicant: Knowledge Development for Rugged Optical Communications, S.L., 28760 Tres Cantos (ES)
(72) Inventor: Ortiz Rojo, David, 28760 Tres Cantos (ES); Pinzón Castillo, Plinio Jesús, 28760 Tres Cantos (ES); Pérez-Aranda Alonso, Rubén, 28760 Tres Cantos (ES); Barbero Díaz, Fernando, 28760 Tres Cantos (ES)
(74) Representative: Grünecker Patent- und Rechtsanwälte PartG mbB

(57) **Abstract**

The invention relates to a surface-mountable, SMT, integrated optical transceiver (100, 200, 300, 400) for multi-mode optical fiber applications, comprising: a casing (101, 201, 301, 401), wherein the casing comprises a base part and a coupling portion (102, 202, 302, 402), said coupling portion (102, 202, 302, 402) being configured for coupling to an external ferrule, wherein the coupling portion (102, 202, 302, 402) comprises at least one alignment portion comprising at least one alignment surface, and said base part comprising a top surface and a bottom surface; a substrate comprising a top surface and a bottom surface, said top surface of the substrate comprising at least one integrated circuit, wherein said bottom surface of the substrate is mountable to a printed circuit board surface and wherein the casing (101, 201, 301, 401) is mounted to the top surface of the substrate; wherein the coupling portion (102, 202, 302, 402) is configured for providing at least two optical paths to and from the substrate; and wherein the at least one alignment surface is configured for aligning the coupling portion and the external ferrule to a mating position.

## Description

### Background

The present disclosure relates to a surface-mountable, SMT, integrated optical transceiver for multi-mode optical fiber applications, a coupling portion or coupling interface for coupling a ferrule to said surface-mountable integrated optical transceiver, and a method of manufacturing said surface-mountable integrated optical transceiver.

Current optical transceivers used for optical fiber communication applications in rugged operational environments, e.g. for applications in the automotive or aerospace industry, are either designed for low speed with very large core diameter fibers, or require very specialized assembly procedures and/or very large connectors to make the connection robust, and/or integrate fiber pigtails for isolating the transceiver from the connector and/or are pluggable instead of surface-mountable, which can result in big costs, extra coupling losses, big printed circuit board space occupation and big connectors.

A further drawback of current optical transceivers is that they are difficult to manufacture, typically only include the opto-electrical conversion without other functionality integration on the transceiver, and can also be easily damaged during manufacturing processes.

### Problem

It is therefore the object of the present invention to provide a design of a surface-mountable integrated optical transceiver that improves the robustness, cost, reliability, size, functionality integration and performance of the optical transceiver for rugged operational environments.

Furthermore, it is an object of the present invention to facilitate and improve the manufacturing process for the surface-mountable integrated optical transceiver, in particular to improve the quality, reliability and robustness of the manufacturing process and reduce manufacturing costs.

### Solution

According to the present invention, said objectives are achieved by the subject-matter of the independent claims.

Advantageous embodiments and further developments are the subject-matter of the dependent claims.

An exemplary surface-mountable, SMT, integrated optical transceiver for multi-mode optical fiber applications, in particular multi-mode optical glass fiber applications, in particular multi-mode optical glass fiber applications in the infrared (IR) spectral range, e.g. in the near-infrared (NIR) region, e.g. from 700 nm to 1400 nm, may comprise one, some or all of the following components. However, it is possible to use the herein exemplary described transceiver also for applications using visible light or longer wavelengths.

The surface-mountable integrated optical transceiver can comprise a casing, wherein the casing can comprise a base part and a coupling portion.

Said coupling portion of the casing can be configured for coupling to an external connector; in particular, the coupling portion of the casing can be configured for coupling to an external ferrule.

In other words, said coupling portion provides an interface; in particular, an optical interface for coupling to an external ferrule, e.g. a ferrule of a plug connector or other fiber cable termination.

Furthermore, the coupling portion can comprise at least one alignment portion comprising at least one alignment surface.

Said base part of the casing can comprise a top surface and a bottom surface.

The surface-mountable integrated optical transceiver can further comprise a substrate comprising a top surface and a bottom surface.

Said top surface of the substrate can comprise all electronic and photonic components of the optical transceiver. Stated differently, said substrate can integrate all electronic and photonic components of the optical transceiver for processing the optical signals transmitted and/or received by the optical transceiver.

Furthermore, the substrate can couple and interconnect all electronic and photonic components of the optical transceiver for processing the optical signals transmitted and/or received by the optical transceiver.

For example, said top surface of the substrate can comprise at least one integrated circuit.

Herein, the term integrated circuit may refer to electronic integrated circuits and/or photonic circuits or photonic integrated circuits or optical circuits or photonic components or photonic devices.

The at least one integrated circuit may be implemented using either a single-die or a multi-die configuration.

For example, the top surface of the substrate can comprise at least one electronic integrated circuit and at least two photonic components, e.g. photonic components for a receiving channel and/or for a transmitting channel.

Exemplary photonic components for a receiving channel may comprise photodetectors, e.g. photodiodes, optical filters, wavelength division demultiplexers and further other optical components.

Exemplary photonic components for a transmitting channel may comprise laser diodes, e.g. VCSELs (Vertical-Cavity Surface-Emitting Laser), modulators, wavelength division multiplexers and further other optical components.

Said bottom surface of the substrate is adapted for being mountable to a printed circuit board surface and the casing can be mounted to the top surface of the substrate.

For example, said bottom surface of the substrate, and therefore the surface-mountable integrated optical transceiver, can be adapted for being mountable to a printed circuit board surface via pick-and-place and reflow soldering processes.

Furthermore, the bottom surface of the substrate can comprise a plurality of solder contacts, such as an array of solder balls and/or solder pads, to establish an electrical connection between the transceiver and the printed circuit board, enabling the transceiver to function as an operational element of the printed circuit board.

The coupling portion of the casing of the surface-mountable integrated optical transceiver can be configured for providing at least two optical paths to and from the top surface of the substrate, in particular to and from the at least one integrated circuit. Said at least two optical paths can be adapted for transmitting and/or receiving optical signals.

Herein, the term optical path can inter alia refer to optical paths in a plurality of physical optical media, e.g. air and/or glass and/or a polymer, and/or to optical paths in fibers or fiber-based optical paths. However, preferably, said at least two optical paths to and from the top surface of the substrate can be fiber-free optical paths or free-space optical paths, e.g. optical paths through air, and/or optical paths through optical materials or optical media.

The propagation of optical signals along said possible optical paths can be controlled by one or more optical elements, such as lenses and/or mirrors and/or reflectors and/or beam splitters.

In particular, the optical paths may comprise optical materials that are identical or similar to the transparent material(s) forming the casing of the transceiver. Stated differently, the optical paths can be partially or fully integrated into the casing material.

In particular, the coupling portion of the casing of the surface-mountable integrated optical transceiver can be configured for providing at least two optical paths to and from the above-mentioned exemplary photonic components for transmitting and/or receiving optical signals.

In particular, the coupling portion of the casing of the surface-mountable integrated optical transceiver can be configured for providing optical paths inside the casing of the transceiver. As already indicated above, the casing may comprise one or more optical elements, such as lenses and/or mirrors and/or reflectors and/or beam splitters, to control propagation of optical signals inside the transceiver along a predetermined optical path.

Furthermore, the at least one alignment surface of the at least one alignment portion of the coupling portion of the casing can be configured for aligning the coupling portion and the external connector, e.g. the external ferrule, to a mating position.

Stated differently, the at least one alignment surface can facilitate and ensure alignment of the coupling portion and the external connector, e.g. the external ferrule, when the coupling portion and the external connector, e.g. the external ferrule, are in a mating position.

The above and herein exemplary described surface-mountable integrated optical transceiver enables robust, stable, reliable and high-performance multi-mode optical fiber connections, with low coupling losses and high data rates, e.g. data rates of one or more gigabit per second (Gbps), e.g. data rates greater than or equal to 1 Gbps, greater than or equal to 10 Gbps or greater than or equal to 25 Gbps, or greater than or equal to 50 Gbps, in particular for applications in rugged operational environments such as cars or other vehicles, in which the surface-mountable integrated optical transceiver can be subjected to a high amount of mechanical stress, e.g. due to vibrations, and thermal stress.

The achievable high data rates are particularly useful when a large amount of data needs to be processed in real time, e.g. real-time, high-resolution image and video data for example from cameras of a driving car or backbone communications in vehicle area networks or vehicle data logging.

The above and herein exemplary described surface-mountable integrated optical transceiver can be configured to work with physical contact connectors.

For example, the coupling portion of the above and herein exemplary described surface-mountable integrated optical transceiver can be configured for providing an optical interface for interfacing with an/the external ferrule of physical contact connectors. In the following such an interface is inter alia also referred to as physical contact interface. However, it is to be noted that for this type of interface, no physical contact between fiber end faces of fibers of the external ferrule of physical contact connectors and the coupling portion of the transceiver is required.

Stated differently, said possible physical contact optical interface enables interfacing the transceiver with the external ferrule of a physical contact connector.

Said physical contact optical interface may for example be an interface for interfacing with LC (lucent connector or little connector or local connector) connector interfaces.

In said exemplary physical contact interface of the surface-mountable integrated optical transceiver, the coupling portion can protrude from the top surface of the base part and can comprise at least two sleeves that are oriented vertically or horizontally with respect to the top surface of the base part.

Herein, the term sleeve can refer to a cylindrical or tube-like or channel-like structure that in its interior can accommodate at least part of said optical paths to and from the integrated circuit or to and from the photonic devices or photonic components.

The cross-sections of said sleeves can be circular or non-circular, i.e. oval or rectangular or polygonal.

Said exemplary sleeves can each comprise at least two alignment portions, e.g. an external alignment portion and an internal alignment portion.

The external alignment portion can be exposed to the surroundings of the sleeve, while the internal alignment portion is arranged inside the sleeve.

Both alignment portions can comprise at least one alignment surface.

For example, the at least one alignment surface of each external alignment portion can comprise at least one chamfer, in particular two chamfers. Herein, a chamfer can be understood as referring to a beveled edge.

For example, said at least one chamfer, e.g. said two chamfers, can be arranged at or near the rim of a sleeve.

For example, the possible diameter of the outer edge of the chamfers can be in the range of 0.6 to 1.8 mm over the diameter of the internal part of the sleeve, and the chamfer angles can be in the range of 5 to 60 degrees.

In case of the at least one alignment surface of each external alignment portion comprising multiple chamfers, preferably two chamfers, the chamfer radius of chamfers arranged closer to the rim of a sleeve can be larger than the chamfer radius of chamfers arranged further from the rim of the sleeve. Furthermore, the chamfer angle of chamfers arranged closer to the rim of a sleeve can be smaller than the chamfer angle of chamfers arranged further from the rim of a sleeve.

For example in a dual-chamfer configuration, i.e. with the at least one alignment surface of each external alignment portion comprising two chamfers, wherein the chamfer angle with respect to the sleeve's longitudinal axis of the chamfer arranged closer to the rim of the sleeve can be in the range of 30 to 60 degrees and wherein the chamfer angle of the chamfer arranged further from the rim of the sleeve can be in the range of 5 to 20 degrees.

Said exemplary two chamfers can be connected to each other to form the at least one alignment surface of each external alignment portion. The two chamfers could also be integrated in a continuous chamfer-like shape where the chamfer angle varies continuously from a stepper angle at the entrance to a smaller angle where the chamfer meets the internal alignment portion.

The exemplary at least one alignment surface of each internal alignment portion can comprise at least one flat surface having a central opening and a cylindrical surface.

In other words, the internal alignment portion can be formed by a cylindrical shape inside the sleeve, wherein one end, e.g. the end facing outward of the sleeve, is open and the other end that is located inside the sleeve comprises a flat surface having a central opening.

The cylindrical surface or cylindrical shape of each internal alignment portion may have a diameter in the range of 1.00 to 3.00 mm, e.g. can be 1.25 mm or 2.50 mm. The length of the cylindrical surface of each internal alignment portion can be in the range of 1.5 to 4 times of its diameter.

Said central opening being part of an optical path can be configured for transmitting and/or receiving optical signals. For example, the central opening may receive optical signals from an optical fiber face from the external ferrule.

Said flat surfaces of the internal alignment portions can define the mating position when the external ferrule is connected to the coupling portion.

Said central opening in the flat surface at the end of internal alignment portion that is located inside the sleeve enables avoiding contact between the external ferrule and possible optical element(s), e.g. a lens, of the coupling portion of the surface-mountable integrated optical transceiver, thereby reducing wear of the casing of the surface-mountable integrated optical transceiver.

The above exemplary described physical contact optical interface may also be a focused physical contact optical interface, i.e. may comprise additional optical elements, e.g. integrated micro lenses, configured to focus the optical signal beam, to improve coupling efficiency and to reduce sensitivity to minor fiber misalignments.

Said central opening in the flat surface at the end of internal alignment portion that is located inside the sleeve also can enable avoiding contact between the external ferrule and said possible optical elements that can be accommodated in the central opening, thereby protecting said possible optical elements of the coupling portion of the surface-mountable integrated optical transceiver.

The above and herein exemplary described possible physical contact optical interface configuration of the surface-mountable integrated optical transceiver provides an interface for interfacing with a/the ferrule of a plug connector that is less sensitive to angular misalignments between the transceiver and a/the ferrule of a plug connector.

Alternatively, the above and herein exemplary described surface-mountable integrated optical transceiver can be configured for providing an expanded beam optics interface for interfacing with an/the external ferrule. Herein, the expanded beam optics interface can transmit and/or receive a collimated light beam with a diameter that is wider than the light beam diameter inside a fiber of an/the external ferrule. For example, this can be achieved by placing a collimating lens (or a beam expander) at the fiber's end and/or at the transceiver's coupling portion.

Herein, an expanded beam optics interface is a further type of non-physical contact interface between the fibers of the external ferrules and the optical paths of the surface-mountable integrated optical transceiver.

In such an interface, the optical signal, i.e. the light beam, can be transmitted through free space and/or an intermediate medium into the coupling portion of the transceiver, thereby eliminating direct physical contact between the coupling portion of the transceiver and the external ferrule, in particular between the possible optical elements in the coupling portion of the transceiver and the external ferrule, thereby reducing wear of the casing of the surface-mountable integrated optical transceiver.

As previously indicated, the optical paths inside the transceiver can be fiberless, e.g. realized as optical paths in which optical signals can propagate through optical coupling materials and/or through air or free space, and wherein said propagation of optical signals inside the transceiver can be controlled by one or more optical elements, e.g. lenses and/or mirrors and/or reflectors and/or prisms and/or beam splitters.

Said exemplary coupling portion can protrude from the top surface of the base part and can comprise two sleeves that are oriented vertically or horizontally with respect to the top surface of the base part.

Herein, the term sleeve can again refer to a cylindrical or tube-like or channel-like structure that in its interior can accommodate at least part of said optical paths to and from the integrated circuit or to and from the photonic devices or photonic components.

The cross-sections of said sleeves can be circular or non-circular, i.e. oval or rectangular or polygonal.

Each of said sleeves can comprise one alignment portion comprising at least one alignment surface. Said alignment portion can be arranged at the end of the sleeve that faces towards the external ferrule and that enables mating the coupling portion with the external ferrule.

The at least one alignment surface of each alignment portion can comprise a concave or convex conical surface in combination with at least one flat surface, e.g. at least two flat surfaces.

Said concave or convex conical surfaces can also be referred to as cones or cone-like surfaces.

Said exemplary cones or cone-like surfaces can have a minor radius in the range of 0.25 to 0.5 mm and a major radius in the range of 0.55 mm to 1.4 mm. Furthermore, said exemplary cones or cone-like surfaces can have an apex angle in the range of 60 to 120 degrees.

The concave conical surface can be oriented such that it faces inward, i.e. towards the interior of the sleeve. Stated differently, the apex of the concave conical surface can be located inside the sleeve. Such exemplary cone can also be referred to as female cone.

The convex conical surface can be oriented such that it faces outward of the sleeve, i.e. towards the external ferrule. Stated differently, the apex of the convex conical surface can be located outside the sleeve. Such exemplary cone can also be referred to as male cone.

Aside from having opposite orientations, the size, shape and curvature of the concave conical surface and the size, shape and curvature of the convex conical surface can be the same. However, it is also possible that the concave conical surface and the convex conical surface have different sizes and/or different shapes and/or different curvatures.

The apex of each conical surface or cone can have an aperture for accommodating an optical path, i.e. for allowing transmission and/or reception of optical signals.

Furthermore, said apex of each conical surface or cone can comprise at least one optical element, e.g. lenses, where said lenses can have any shape, e.g. including a flat lens surface, for modifying the optical signals, e.g. modifying the beam shape of the optical signals, e.g. focusing or collimating the optical beam carrying the optical signal for transmission and/or reception.

As previously indicated, the casing may be optically transparent, i.e. it may be made partially or entirely of a transparent material or it may comprise a transparent material or a combination of transparent materials.

Said at least one optical element may be formed by molding a transparent material that is similar to or identical to the optically transparent material used in the casing.

For example, said transparent material may comprise glass or transparent plastic materials with low absorption in the infrared wavelength range (e.g. optical transmission greater than 70% along 1 mm of material), e.g. polymethyl methacrylate and/or polycarbonate and/or cyclo olefin polymer and/or cyclo olefin copolymer and/or polystyrene and/or polyetherimide and/or polyethylene terephthalate and/or copolyesters and/or polyarylate and/or polydimethylsiloxane and/or polyimide.

This inter alia can allow manufacturing, e.g. molding, the casing together with the at least one optical element.

Furthermore, in any of the above and herein described exemplary configurations of the transceiver, the casing could be partially coated with an electrically conducted material or complemented with an additional electrically conductive piece in order to provide electromagnetic shielding of the at least one integrated circuit.

The at least one flat surface or flat alignment surface can be arranged on the periphery, e.g. rim, of the end of the sleeve that faces towards the external ferrule. Stated differently, the at least one flat surface or flat alignment surface can have the shape of an arc or arc segment that at least can cover parts of the periphery, e.g. rim, of the end of the sleeve that faces towards the external ferrule.

In particular, the at least one flat surface or flat alignment surface can be fully integrated into the end of the sleeve, e.g. can be fully integrated in the rim, that faces towards the external ferrule or can protrude from the end of the sleeve, e.g. can protrude from the rim.

Specifically, a sleeve may comprise two flat surfaces on opposing sides of the periphery, e.g. rim, of the end of the sleeve that faces towards the external ferrule.

More specifically, a sleeve may comprise two flat surfaces on opposing sides of the periphery, e.g. rim, of the end of the sleeve, wherein a line connecting a center point of the two flat surfaces is orthogonal to the mating direction with an/the external ferrule and also orthogonal to a line connecting the sleeves of the coupling portion.

This can contribute to preventing or reducing angular misalignments between the coupling portion and an/the external ferrule in mating position.

Exemplary surface area sizes of said flat surface(s) or said flat alignment surface(s) can lie in the range 0.1 to 0.5 mm² (square millimeters). This can facilitate the support of mating forces occurring between the transceiver and an external ferrule of a plug connector without significant deformation. In case of the sleeve comprising two flat surfaces on opposing sides of the periphery, the separation distance along the line connecting a center point of the two flat surfaces, said line being orthogonal to both the mating direction and the line connecting the sleeves of the coupling portion, can be in the range of 1.0 mm to 5.0 mm. This can further improve the control of the angular orientation and angular alignment between the external ferrule and the transceiver.

The conical surfaces or cones can each be connected to or be separated from the corresponding flat surface(s).

For example, the concave conical surface can be connected to at least one flat surface and the convex conical surface can be connected to at least one flat surface.

Stated differently, the at least one alignment surface of each alignment portion can comprise a concave or convex conical surface or cone that is connected with at least one flat surface.

In particular, the concave conical surface and the corresponding at least one flat surface can form a contiguous alignment surface and the convex conical surface and the corresponding at least one flat surface can form a contiguous alignment surface.

However, it is also possible that the concave conical surface and the corresponding at least one flat surface are separate and not contiguous.

Similarly, also the convex conical surface and the corresponding at least one flat surface can be separate and not contiguous.

The above exemplary described alignment surface of each alignment portion that can comprise a concave or convex conical surface in combination with at least one flat surface provides an improved alignment between the transceiver and an/the external ferrule.

The above exemplary described surface-mountable integrated optical transceiver configured for providing an expanded beam optics interface for interfacing with an/the external ferrule can provide a more robust and more stable optical performance.

For example, by having a better balance between angular and radial alignment tolerance sensitivity, the expanded beam interface is better equipped to withstand vibration, shock and mechanical stresses, and damage and wear of the surfaces of the transceiver and ferrule that are in direct contact, making it suitable for rugged applications, such as in the car or aerospace industry.

By having an expanded beam with a comparatively larger area as compared to physical contact interfaces, such an interface is also more resistant to contamination by particles, since the risk of particles completely obstructing the light beam is avoided or at least greatly reduced. This can make the transceiver especially suitable for rugged applications, such as in the car or aerospace industry.

The flat surfaces of the alignment surfaces of the alignment portions can be configured for providing a minimum clearance between the concave or convex conical surfaces of the alignment surfaces and the external ferrule when the coupling portion and the external ferrule are in a mating position.

For example, said possible clearance or minimum clearance between the concave or convex conical surfaces of the alignment surfaces and the external ferrule of a plug connector can lie in range of 1 to 50 µm (micrometers).

For example, when said flat surfaces of the alignment surfaces of the alignment portions can come into contact with corresponding flat surfaces of the external ferrule, a clearance can be provided between the concave or convex conical surfaces of the alignment surfaces and corresponding similar conical surfaces of the external ferrule.

Such a clearance can inter alia reduce the likelihood of excessive mechanical contact or interference during mating, thereby preventing damage to the ferrule or transceiver.

Furthermore, such a possible clearance provides increased mechanical tolerance, e.g. tolerance to compensate for irregularities in contact or mating surfaces, increased durability, and resilience to environmental factors like particle contamination.

The above exemplary described alignment surface(s) of each alignment portion of the sleeves of the coupling portion, wherein said alignment surfaces can comprise a concave or convex conical surface (or cones) in combination with at least one flat surface, improves the ease and precision with which the transceiver and an external ferrule can be aligned with respect to each other.

For example, the above-described exemplary alignment surface of each alignment portion facilitates the self-alignment of the transceiver with respect to an/the external ferrule. In particular, it can ensure angular alignment between the transceiver and an/the external ferrule and can compensate for initial radial misalignments between the transceiver and an/the external ferrule at the beginning of the mating process.

In particular, the at least one flat surface can ensure angular alignment between the transceiver and an/the external ferrule and the concave or convex conical surface (or cones) can compensate for initial radial misalignments between the transceiver and an/the external ferrule.

The above and herein exemplary described possible expanded beam optics interface configuration of the surface-mountable integrated optical transceiver provides an interface for interfacing with an/the ferrule of a plug connector that is less sensitive to longitudinal and lateral misalignments between the transceiver and an/the external ferrule and that also can compensate for initial radial misalignments between the transceiver and an/the external ferrule.

This improved alignment also can lead to better mechanical stability of the connection between the transceiver and an/the external ferrule and to fewer coupling losses.

The coupling portion of the above-described exemplary surface-mountable integrated optical transceiver configured for providing an expanded beam optics interface for interfacing with an/the external ferrule can have a hermaphroditic design that can be configured for mating with an external ferrule of a plug connector.

This exemplary hermaphroditic design inter alia can facilitate the connection of the transceiver to an external ferrule, since the mating can be carried out without concern for orientation or matching male and female parts.

Furthermore, it reduces the risk of damaging the transceiver during mating or demating operations.

This exemplary hermaphroditic design can also facilitate self-alignment between the transceiver and an/the external ferrule.

In any configuration of the surface-mountable integrated optical transceiver, e.g. regardless of whether the coupling portion is configured for providing a physical contact optical interface or an expanded beam optics interface, the coupling portion, e.g. the two sleeves, can be oriented vertically or horizontally with respect to the top surface of the base part.

In particular, in any configuration of the surface-mountable integrated optical transceiver, the coupling portion can be exposed to provide free space around the coupling portion to accommodate a protective shroud around the external ferrule when the coupling portion and the external ferrule are in a mating position.

In particular, the coupling portion can be exposed on all lateral sides, thereby providing an exemplary scoop-proof/Kojiri-safe configuration.

This enables using a protective shroud around the ferrule of the plug connector, protecting the ferrule inside the connector plug from accidental damage in the unmated state.

Additionally, the coupling portion itself can be protected this way since said shroud also can surround the coupling portion is in mated stated with the external ferrule.

For example, when the coupling portion of the transceiver and the external ferrule are in a mating position, the connection between the coupling portion of the transceiver and the external ferrule can be protected from unwanted or accidental demating or damage.

This can be useful especially in rugged operational environments of the transceiver.

Said free space for accommodating the protective shroud can, for example, be provided by the coupling portion comprising an undercut for a horizontally-oriented coupling portion or by the coupling portion being extended in its length for a vertically-oriented coupling portion.

Also in any of the above-described configurations of the surface-mountable integrated optical transceiver, the top surface of the base part of the casing can comprise at least one recess region, wherein the thickness of the base part is lower than the thickness of the base part regions surrounding the at least one recess region.

This can facilitate the heat dissipation from the substrate to the environment of the transceiver.

For example, this can dissipate heat that might originate from any electronic and/or protonic components on the substrate and/or heat generated from manufacturing or assembly processes, e.g. heat generated from reflow soldering processes, thereby protecting the transceiver from any harmful overheating.

Alternatively or in addition and also in any of the above exemplary described configurations of the surface-mountable integrated optical transceiver, the top surface of the base part of the casing can comprise at least one hole configured for providing a low thermal resistance contact path to the substrate, e.g. to the at least one integrated circuit on the substrate.

This can further contribute to improved thermal management of the transceiver and can further facilitate dissipating heat from the substrate to the environment of the transceiver Said at least one hole can be a through-hole in the casing. Furthermore, said at least one hole can be filled with a thermally conductive medium to improve heat dissipation efficiency.

In any of the above exemplary described configurations of the surface-mountable integrated optical transceiver, the bottom surface of the base part of the casing can comprise a recess or internal cavity that can be configured to accommodate the at least one integrated circuit of the substrate, in particular that can accommodate all of the electronic and photonic components of the optical transceiver.

Stated differently, said recess or internal cavity can act as a cover or lid that covers the at least one integrated circuit of the substrate, in particular that can cover all of the electronic and photonic components of the optical transceiver.

This optional and exemplary recess or internal cavity can have a size and shape that are conformal to the size and shape of the at least one integrated circuit of the substrate and/or that can have a size and shape that are conformal to the topology of any electronic and/or photonic components on the substrate, e.g. conformal to the size and shape of an electronic integrated circuit and at least two photonic components on the substrate.

This optional recess or internal cavity of the bottom surface of the base part of the casing of the surface-mountable integrated optical transceiver can further reduce undesired thermal and mechanical stress on the transceiver. For example, said optional recess or internal cavity can help to avoid the build-up of overpressure during reflow soldering during the manufacturing process.

Said optional recess internal cavity of the bottom surface of the base part of the casing of the transceiver may further comprise at least one vent or conduit configured to vent gas from the substrate, e.g. from the environment of the at least one integrated circuit or from any or all of the electronic and/or photonic components on the substrate, to the environment of the surface-mountable integrated optical transceiver.

This can further mitigate the risk of building up overpressure during reflow soldering and can also help to avoid problems due to outgassing from the substrate.

In any of the above exemplary described configurations of the surface-mountable integrated optical transceiver, the bottom surface of the base part of the casing can comprise a plurality of legs, e.g. at least three, e.g. four legs, for controlling the distance between the base part and the substrate during assembly.

This can improve alignment between the casing and the substrate and can improve mechanical stability of the transceiver.

Furthermore, said legs can enable controlling the thickness of a glue layer when glue is used to mount the bottom surface of the base part of the casing to the substrate.

For example, the thickness of a glue layer could be controlled by said possible legs to glue thickness variations of less than 10 µm (micrometers).

The possible length of said possible legs can be in the range of 10 to 100 µm (micrometers).

This way, a uniform glue thickness can be obtained that can ensure consistent mechanical bonding between the casing and substrate. This can enhance structural integrity and stability and reduce stress on the substrate and casing during operation, especially in rugged operational environments.

A controlled glue thickness can also ensure a balanced adhesive bond, which can better tolerate thermal expansions and contractions that might occur during operations.

In any of the above exemplary described configurations of the surface-mountable integrated optical transceiver, the casing of the transceiver may comprise one or more holes for facilitating the connection of a plug connector, e.g. a fiber cable plug connector, to the surface-mountable integrated optical transceiver. Said one or more holes may exemplary be arranged between the possible sleeves of the coupling portion of the transceiver.

For example, said holes may facilitate mounting a so called center of the board plug directly to the transceiver. This possible center of the board plug can further comprise or provide a mechanism, e.g. a latch mechanism, for keeping the ferrule of the plug in contact with the coupling portion of the transceiver.

This can inter alia reduce the size and complexity of the connection in center of the board applications where the mechanical loads on the fiber optic cables are very small, while providing the needed mechanical connection stability between the transceiver and a fiber cable connector, in particular with a fiber cable plug connector, e.g. a fiber cable plug connector with a ferrule.

Furthermore, said possible center of the board plug may be configured, for pressing the mating end of the ferrule against the alignment portions of the transceiver, thereby improving the coupling stability and optical performance and reducing the sensitivity for longitudinal misalignments between the transceiver and a/the ferrule of a/the plug connector.

Being able to mount the transceiver at or near the center of a/the printed circuit board surface provides technical advantages such as improved signal integrity, enhanced thermal management, balanced mechanical stress and optimized printed circuit board layout.

For example, positioning the transceiver at the center of the printed circuit board reduces the average trace length required to route signals between the transceiver and other components (e.g. processors, switches or memory).

Centrally placing the transceiver also allows for more efficient heat distribution across the printed circuit board layout.

However, the transceiver may also be mounted at the periphery or edge of a/the printed circuit board surface. In such an edge-of-board configuration, a header accommodating the transceiver may be mounted onto the printed circuit board surface to facilitate and support the connection between the transceiver and the ferrule of a plug.

For example, in this configuration, a plug may be attached to the header to maintain contact between the ferrule of the plug and the transceiver. The header may further comprise a hook or latch mechanism to secure the plug in place and ensure continuous contact with the transceiver. This can simplify connections with external fiber cable connectors.

The technical contribution of this disclosure in particular lies in providing a reflow-compatible, fully-integrated high-speed (e.g. with data rates greater than or equal to 1 Gbps or greater than or equal to 10 Gbps or greater than or equal to 25 Gbps or greater than or equal to 50 Gbps) optical transceiver that is compact, robust and reliable and optimized for rugged applications, such as operating in cars or other vehicles.

As previously indicated, this disclosure further provides a coupling interface or coupling portion for a surface-mountable integrated optical transceiver as exemplarily described above, wherein the coupling portion is configured for coupling to an external ferrule, and wherein the coupling portion can have any of the above and herein described features. For example, the coupling portion can comprise at least one alignment portion comprising at least one alignment surface, and wherein the coupling portion is configured for providing at least two optical paths to and from the surface-mountable integrated optical transceiver.

Furthermore, any of the above exemplary described surface-mountable integrated optical transceivers can be manufactured and assembled according to a manufacturing or assembly method that can comprise the following steps:
- Providing the substrate, wherein the substrate can comprise at least one integrated circuit. For example, said substrate can comprise all electronic and photonic components of the optical transceiver.
- Providing the casing of the surface-mountable integrated optical transceiver. Herein, the order of the two steps of providing the substrate and the casing can be rearranged such that either step can be carried out first or that both steps can be carried out at the same time.
- Mounting, e.g. gluing, the bottom surface of the base part of the casing to the top surface of the substrate, wherein the mounting can comprise aligning the bottom surface of the base part of the casing and the top surface of the substrate to each other, and wherein said aligning can be carried out with the use of fiducials. Said optional fiducials can be dedicated specific reference markings or reference structures on the casing, e.g. casing recesses, or on the substrate. It is also possible that components or other physical structural features already present on the substrate or casing can be used as fiducials to aid in aligning the casing and substrate to each other.

In case of the transceiver having a solder contact package, e.g. a ball grid array package, the solder contacts may already be attached to the bottom surface of the provided substrate or they can also be attached to the substrate at a later step.

When providing the substrate, any integrated circuits and/or any photonic components and/or electronic components can be attached to the top surface of the substrate with a positional accuracy of better than 10 µm using conductive or non-conductive epoxy processes, or flip-chip solder processes or eutectic die attach processes.

These exemplary manufacturing or assembly steps can facilitate and simplify the manufacturing of the surface-mountable integrated optical transceiver, while ensuring a precise and robust alignment of the components of the transceiver. Said exemplary possible fiducials can also be used for inspection purposes.

These exemplary manufacturing or assembly steps allow aligning the base part of the casing with respect to the substrate to an accuracy of better than 10 µm. Also the thickness of a possible glue layer between the bottom surface of the base part and the top surface of the substrate can be controlled such that the glue layer thickness variation can be less than 10 µm.

The following figures illustrate exemplarily:
- Fig. 1a:: Exemplary transceiver with an expanded beam optics interface
- Fig. 1b:: Alternative exemplary transceiver with an expanded beam optics interface
- Fig. 1c:: Exemplary zoom on coupling portion of transceiver of Fig.1a
- Fig. 2a:: Exemplary transceiver with a physical contact optical interface
- Fig. 2b:: Alternative exemplary transceiver with a physical contact optical interface
- Fig. 3:: Exemplary cross-section of transceiver of Fig. 2b
- Fig. 4:: Exemplary cross-section of transceiver of Fig. 1b
- Fig. 5:: Exemplary transceiver casing with an exemplary internal cavity in bottom surface of base part
- Fig. 6a:: Example of a transceiver mounted onto a printed circuit board
- Fig. 6b:: Detail of Fig. 6a showing exemplary solder contacts on the bottom surface of the base part
- Fig. 6c:: Exemplary edge of board configuration showing transceiver with header
- Fig. 6d:: Exemplary configuration of transceiver with header connected to a plug connector

The figures merely serve to exemplarily illustrate certain exemplary technical aspects of some of the features of the claimed subject-matter.

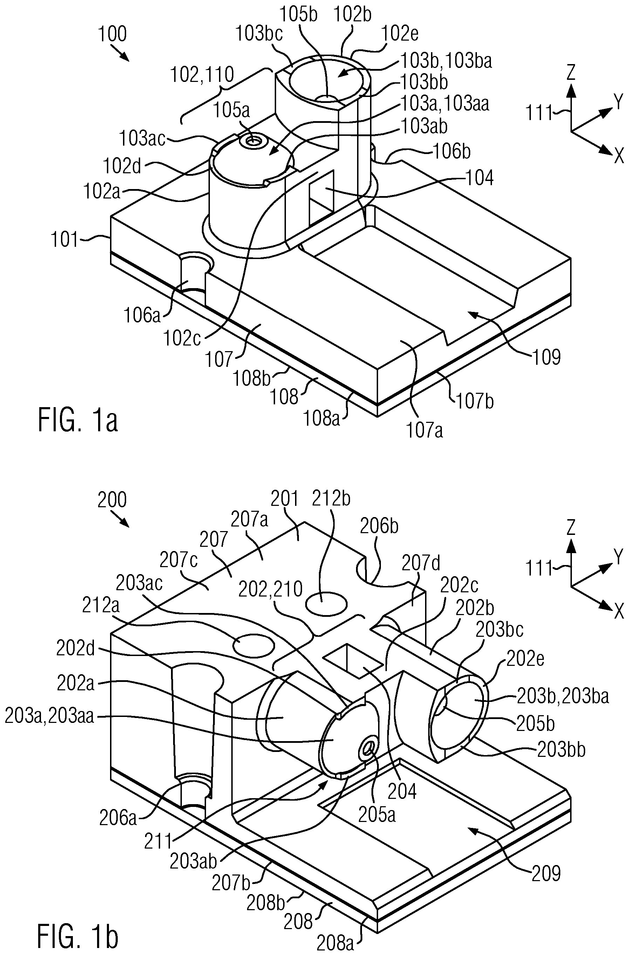

**Fig. 1a** exemplarily shows an exemplary surface-mountable integrated optical transceiver 100 with an exemplary vertical expanded beam optics interface 110.

This exemplary transceiver 100 comprises an exemplary base part 107 and an exemplary coupling portion 102 that is exemplarily configured as exemplary vertical expanded beam optics interface 110.

Said exemplary coupling portion 102 is configured for coupling to an external ferrule (not shown) of an external plug connector (not shown).

The coupling portion 102 comprises two exemplary vertically oriented sleeves 102a, 102b that exemplarily protrude vertically from the base part 107, e.g. from the top surface 107a of the base part 107. The sleeves 102a, 102b have an exemplary cylindrical shape, but other sleeve shapes are possible too.

Furthermore, the exemplary sleeves 102a, 102b can have different lengths, wherein sleeve 102a is exemplarily shorter than sleeve 102b.

As further exemplarily illustrated, the exemplary sleeves 102a, 102b can be connected by an exemplary bridge 102c, which can comprise a hole 104 for facilitating connecting the transceiver to a plug connector (not shown). Said hole 104 is exemplary arranged between the sleeves 102a, 102b.

For example, said hole 104 may facilitate mounting a center of the board plug (not shown) to the transceiver. This possible plug can further comprise or provide a mechanism, e.g. a latch mechanism, for keeping an/the external ferrule of the plug (not shown) in contact with coupling portion 102 of the transceiver 100.

The vertical orientation of the sleeves 102a, 102b is exemplarily illustrated as being aligned with or parallel to the exemplary Z-axis of the exemplary orthogonal reference coordinate system 111 spanned by the exemplary X-, Y- and Z-axes. In the example, the bottom surface 107b of the base part 107 and the substrate 108 are configured and oriented such that they lie parallel to the plane spanned by the X- and Y-axes of the coordinate system 111.

In this example, the coupling or mating direction with an/the external ferrule (not shown) of an/the external plug connector (not shown) can lie along or parallel to the Z-axis.

The exemplary vertically oriented sleeves 102a, 102b each comprise exemplary alignment portions 103a, 103b that comprise alignment surfaces 103aa, 103ab, 103ac, 103ba, 103bb, 103bc.

For example, sleeve 102a comprises alignment portion 103a with exemplary alignment surface 103aa that comprises an exemplary convex conical surface or cone and two exemplary flat surfaces 103ab, 103ac.

The apex of cone 103aa is exemplarily located outside the sleeve 102a.

Exemplary sleeve 102b comprises alignment portion 103b with exemplary alignment surface 103ba that comprises an exemplary concave conical surface or cone and two exemplary flat surfaces 103bb, 103bc.

The apex of cone 103ba is exemplarily located inside the sleeve 102b.

The exemplary flat surfaces or flat alignment surfaces 103ab, 103ac, 103bb, 103bc are exemplarily arranged on the rims 102d, 102e of the sleeves 102a, 102b. The number of the flat surfaces is just exemplary. For example, it is conceivable that each sleeve only has one flat alignment surface or more than two flat alignment surfaces.

In particular, as illustrated, the flat surfaces 103ab, 103ac, 103bb, 103bc on each rim 102d, 102e can be arranged on opposing rim sides along or parallel to the X-axis.

This can contribute to preventing or reducing angular misalignments between the coupling portion 102 and an/the external ferrule (not shown) in mating position.

The flat surfaces 103ab, 103ac, 103bb, 103bc can be fully integrated into the end of the sleeve, e.g. can be fully integrated in the rims 102d, 102e that face towards the external ferrule (not shown) or can protrude from the end of the sleeve 102a, 102b, e.g. can protrude from the rim 102d, 102e.

For example, the flat surfaces 103ab, 103ac of sleeve 102a are arranged on protrusions along the rim 102d, whereas the flat surfaces 103bb, 103bc of sleeve 102b are integrated in the rim 102e and do not protrude from the rim 102e.

The exemplary alignment surfaces 103aa, 103ab,103ac, 103ba, 103bb, 103bc of the alignment portions 103a, 103b enable precise alignment of the coupling portion 102 of the transceiver 100 with an/the external ferrule (not shown) to a mating position.

Each apex of each exemplary cone 103aa, 103ba can have an aperture for accommodating an optical path, i.e. for allowing transmission of optical signals to optical fibers and/or reception of optical signals from optical fibers from an external ferrule (not shown).

In the example shown, said apexes each comprise an exemplary optical element 105a, 105b, e.g. a lens.

Said optical elements 105a, 105b can be formed from the same optical transparent material as the casing 101. Stated differently, the optical elements 105a, 105b can be an integral part of the casing 101 and can be formed in the same manufacturing step, e.g. molding step, as the casing 101.

The different orientation of the cones 103aa, 103ba, wherein cone 103aa can be referred to as male cone and cone 103ba can be referred to as female cone, can represent an exemplary hermaphroditic design of the coupling portion 102 of the transceiver 100.

The bottom surface 107b of the base part 107 of the casing 101 is mounted to an exemplary top surface 108a of the exemplary substrate 108.

Hence, the coupling portion 102, via the exemplary optical elements 105a, 105b can provide two optical paths in and out of the transceiver 100, wherein said two optical paths can lead to and/or from the top surface 108a of the exemplary substrate 108.

Said exemplary top surface 108a of the exemplary substrate 108 can comprise at least one electronic integrated circuit; in particular, at least one electronic integrated circuit and at least two photonic components (not shown) which can couple to said exemplary optical paths.

The bottom surface 108b of the substrate 108 can be mounted, e.g. via solder contacts (not shown), to a printed circuit board surface (not shown).

The topology or surface profile of the top surface 107a of the shown base part 107 is exemplary only: other topologies or surface profiles that allow a vertical orientation of the coupling portion 102 are conceivable too.

Stated differently, the illustrated substantially box-shaped base part 107 of the casing 101 is exemplary only.

In the shown example, the coupling portion 102 is exemplarily exposed on all lateral sides, thereby providing an exemplary scoop-proof/Kojiri-safe configuration.

This can enable using a protective shroud around the ferrule of the plug connector (not shown), protecting the ferrule inside the connector plug from accidental damage in the unmated state.

Additionally, when the coupling portion 102 of the transceiver 100 and an/the external ferrule are in a mating position, the connection between the coupling portion 102 of the transceiver 100 and an/the external ferrule can be protected from accidental unmating or damage.

In addition or alternatively, said possible center of the board plug (not shown) that can be attached via the hole 104 to the transceiver can provide protection from unwanted or accidental demating.

However, it is also possible that there is no hole between the sleeves 102a, 102b and that both sleeves 102a, 102b are reduced in height such that no scoop-proof/Kojiri-safe configuration is provided.

In the shown example, the top surface 107a of the base part 107 further comprises an exemplary recess region 109, wherein the thickness of the base part 107 is lower than the thickness of the base part regions surrounding the at least one recess region 109.

Herein, the thickness can exemplarily refer to a thickness measured along the Z-axis of coordinate system 111.

The top surface 107a of the base part 107 or its recess 109 of the casing 101 can also comprise at least one hole (not shown) configured for providing a low thermal resistance contact path to the substrate, e.g. to the at least one integrated circuit on the substrate. Said at least one hole can be filled with a thermally conductive medium to improve heat dissipation efficiency.

In the shown example, the casing 101 has two lateral recesses 106a, 106b on opposing sides of the casing 101 that can act as fiducials to aid in aligning the bottom surface 107b of the base part 107 of the casing and the top surface 108a of the substrate to each other during manufacturing of the transceiver 100.

**Fig. 1b** exemplarily shows an exemplary surface-mountable integrated optical transceiver 200 with an exemplary horizontal expanded beam optics interface 210.

This exemplary transceiver 200 comprises an exemplary base part 207 and an exemplary coupling portion 202 that is exemplarily configured as exemplary horizontal expanded beam optics interface 210.

Said exemplary coupling portion 202 is configured for coupling to an external ferrule (not shown) of an external plug connector (not shown).

The coupling portion 202 comprises two exemplary horizontally oriented sleeves 202a, 202b that exemplarily protrude horizontally from the base part 207.

The shape and configuration of the coupling portion 202 can be similar or identical to the coupling portion 102 of the transceiver 100 of Fig. 1a, with the only difference being the horizontal orientation instead of the vertical orientation.

Instead of protruding vertically from the top surface 207a of the base part 207, the coupling portion 202 and its sleeves 202a, 202b can protrude from a lateral side 207d of an exemplary base part protrusion 207c.

The shape, e.g. box shape, of the exemplary base part protrusion 207c is exemplary only, i.e. other shapes that allow for a horizontal orientation of the coupling portion 202 and its sleeves 202a, 202b are possible too.

The sleeves 202a, 202b have an exemplary cylindrical shape, but other sleeve shapes are possible too.

Aside from the different orientation, the coupling portion 202 and coupling interface 210 can be similar or identical to the coupling portion 102 and the coupling interface 110 of the transceiver 100 from Fig. 1a.

In particular, aside from the different orientation, the sleeves 202a, 202b can be similar or identical to the sleeves 102a, 102b of transceiver 100 from Fig. 1a.

The exemplary sleeves 202a, 202b can have different lengths, wherein sleeve 202a is exemplarily shorter than sleeve 202b.

As further exemplarily illustrated, the exemplary sleeves 202a, 202b can be connected by an exemplary bridge 202c, which can comprise a hole 204 for facilitating mounting of a plug connector (not shown).

For example, said hole 204 may facilitate mounting a center of the board plug (not shown) to the transceiver. This possible plug can further comprise or provide a mechanism, e.g. a latch mechanism, for keeping an/the external ferrule of the plug connector (not shown) in contact with the coupling portion 202 of the transceiver 200.

The horizontal orientation of the sleeves 202a, 202b is exemplarily illustrated as being aligned with or parallel to the exemplary X-axis of the exemplary orthogonal reference coordinate system 111 of Fig. 1a spanned by the exemplary X-, Y- and Z-axes.

In the example, the bottom surface 207b of the base part 207 and the substrate 208 are configured and oriented such that they lie parallel to the plane spanned by the X- and Y-axes of the coordinate system 111.

In this example, the coupling or mating direction with an/the external ferrule (not shown) of an/the external plug connector (not shown) can lie along or parallel to the X-axis.

The exemplary horizontally oriented sleeves 202a, 202b each comprise exemplary alignment portions 203a, 203b and alignment surfaces that can be similar or identical to the alignment portions 103a, 103b and alignment surfaces of the transceiver 100 of Fig. 1a.

For example, sleeve 202a comprises alignment portion 203a with exemplary alignment surface 203aa that comprises an exemplary convex conical surface or cone and two exemplary flat surfaces 203ab, 203ac.

The apex of cone 203aa is exemplarily located outside the sleeve 202a.

Exemplary sleeve 202b comprises alignment portion 203b with exemplary alignment surface 203ba that comprises an exemplary concave conical surface or cone and two exemplary flat surfaces 203bb, 203bc.

The apex of cone 203ba is exemplarily located inside the sleeve 202b.

The exemplary flat surfaces or flat alignment surfaces 203ab, 203ac, 203bb, 203bc are exemplary arranged on the rims 202d, 202e of the sleeves 202a, 202b. The number of the flat surfaces is just exemplary.

For example, it is conceivable that each sleeve only has one flat alignment surface or more than two flat alignment surfaces.

In particular, as illustrated, the flat surfaces 203ab, 203ac, 203bb, 203bc on each rim 202d, 202e can be arranged on opposing rim sides along or parallel to the Z-axis.

This can contribute to preventing or reducing angular misalignments between the coupling portion 202 and an/the external ferrule (not shown) in mating position.

The flat surfaces 203ab, 203ac, 203bb, 203bc can be fully integrated into the end of the sleeve, e.g. can be fully integrated in the rims 202d, 202e that face towards the external ferrule (not shown) or can protrude from the end of the sleeve 202a, 202b, e.g. can protrude from the rim 202d, 202e.

For example, the flat surfaces 203ab, 203ac of sleeve 202a are arranged on protrusions along the rim 202d, whereas the flat surfaces 203bb, 203bc of sleeve 202b are integrated in the rim 202e and do not protrude from the rim 202e.

The exemplary alignment surfaces 203aa, 203ab, 203ac, 203ba, 203bb, 203bc of the alignment portions 203a, 203b enable precise alignment of the coupling portion 202 of the transceiver 200 with an/the external ferrule (not shown) to a mating position.

Each apex of each exemplary cone 203aa, 203ba can have an aperture for accommodating an optical path, i.e. for allowing transmission of optical signals to optical fibers and/or reception of optical signals from optical fibers from an external ferrule (not shown).

In the example shown, said apexes each comprise an exemplary optical element 205a, 205b, e.g. a lens.

As previously indicated, said optical elements 205a, 205b can be formed from the same optical transparent material as the casing 201. Stated differently, the optical elements 205a, 205b can be an integral part of the casing 201 and can be formed in the same manufacturing step, e.g. molding step, as the casing 201.

The different orientation of the cones 203aa, 203ba, wherein cone 203aa can be referred to as male cone and cone 203ba can be referred to as female cone, can represent an exemplary hermaphroditic design of the coupling portion 202 of the transceiver 200.

The bottom surface 207b of the base part 207 of the casing 201 is mounted to an exemplary top surface 208a of the exemplary substrate 208.

Hence, the coupling portion 202, via the exemplary optical elements 205a, 205b, can provide two optical paths in and out of the transceiver 200, wherein said two optical paths can lead to and/or from the top surface 208a of the exemplary substrate 208.

Said exemplary top surface 208a of the exemplary substrate 208 can comprise at least one integrated circuit. In particular, the top surface 208a of the exemplary substrate 208 can comprise at least one electronic integrated circuit and at least two photonic components (not shown) which can couple to said exemplary optical paths.

The bottom surface 208b of the substrate 208 can be mounted, e.g. via solder contacts (not shown), to a printed circuit board surface (not shown).

The topology or surface profile of the top surface 207a of the shown base part 207 is exemplary only, i.e. other topologies or surface profiles that allow a horizontal orientation of the coupling portion 202 are conceivable too.

Stated differently, the illustrated substantially box-shaped protrusion 207 of the base part 207 of the casing 201 with optional recesses 206a, 206b and optional holes 212a, 212b and optional undercut 211 is exemplary only.

In the shown example, the coupling portion 202 is exemplarily exposed by the exemplary undercut 211, which exposes the coupling portion 202 above, below and laterally on two sides, thereby providing an exemplary scoop-proof/Kojiri-safe configuration.

This can enable using a protective shroud around the ferrule of the plug connector (not shown), protecting the ferrule inside the connector plug from accidental damage in the unmated state.

Additionally, when the coupling portion 202 of the transceiver 200 and an/the external ferrule are in a mating position, the connection between the coupling portion 202 of the transceiver 200 and an/the external ferrule can be protected from accidental unmating or damage.

In addition or alternatively, said possible center of the board plug (not shown) that can be attached via the hole 204 to the transceiver can provide protection from unwanted or accidental demating.

In the shown example, the base part 207 further comprises an exemplary recess region 209, wherein the thickness of the base part 207 is lower than the thickness of the base part regions surrounding the at least one recess region 209.

Herein, the thickness can exemplarily refer to a thickness measured along the Z-axis of coordinate system 111.

The top surface 207a of the base part 207 of the casing 201 can also comprise at least one hole (not shown) configured for providing a low thermal resistance contact path to the substrate, e.g. to the at least one integrated circuit on the substrate. Said at least one hole can be filled with a thermally conductive medium to improve heat dissipation efficiency.

In the shown example, the casing 201 has two lateral recesses 206a, 206b on opposing sides of the casing 201 that can act as fiducials to aid in aligning the bottom surface 207b of the base part 207 of the casing and the top surface 208a of the substrate to each other during manufacturing of the transceiver 200.

The casing 201 can further comprise two exemplary holes 212a, 212b that are exemplarily arranged in the protrusion 207c and which can facilitate integrating a reflector or mirror in the optical paths inside the casing. This possible reflector or mirror can facilitate total internal reflection of the optical signals along the optical paths, e.g. the optical signal input beam and/or the optical signal output beam, for the case that the optical path traverses an optically transparent casing material.

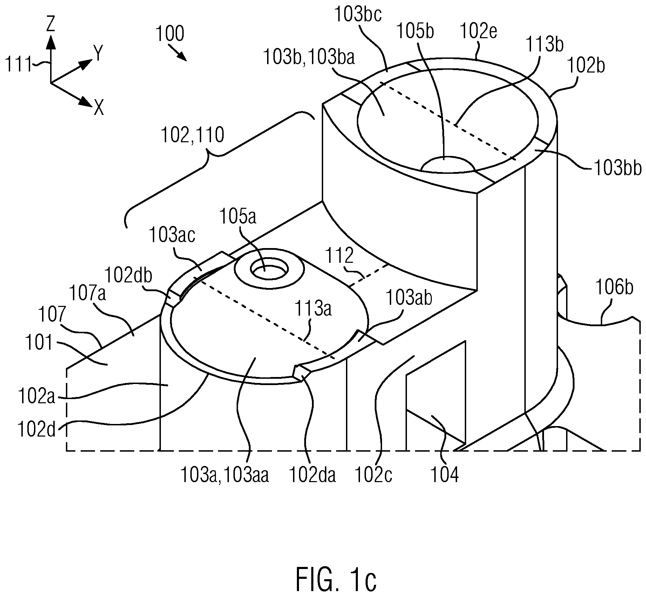

**Fig. 1c** exemplary shows a zoom on a part of the surface-mountable integrated optical transceiver 100 of Fig. 1a which allows a better view of the coupling portion 102 that is exemplarily configured as exemplary vertical expanded beam optics interface 110 for mating with an external ferrule (not shown) in a mating direction that is parallel to the exemplary Z-axis of orthogonal coordinate system 111.

Fig. 1c allows a better view of the two exemplary vertically oriented sleeves 102a, 102b that exemplarily protrude vertically from the base part 107, e.g. from the top surface 107a of the base part 107.

In particular, it allows a better view of the exemplary alignment portions 103a, 103b that comprise alignment surfaces 103aa, 103ab, 103ac, 103ba, 103bb, 103bc.

For example, sleeve 102a comprises alignment portion 103a with exemplary alignment surface 103aa that comprises an exemplary convex conical surface or cone and two exemplary flat surfaces 103ab, 103ac.

Said exemplary flat surfaces 103ab, 103ac of sleeve 102a can be arranged on exemplary protrusions 102da, 102db on the rim 102d on opposing sides.

Said exemplary flat surfaces 103ab, 103ac of sleeve 102a are exemplarily arranged such that the axis 113a connecting a center point of the two flat surfaces 103ab, 103ac is orthogonal to the mating direction with an/the external ferrule (not shown) and also orthogonal to the axis 112 connecting the sleeves 102a, 102b of the coupling portion 102.

Exemplary sleeve 102b comprises alignment portion 103b with exemplary alignment surface 103ba that comprises an exemplary concave conical surface or cone and two exemplary flat surfaces 103bb, 103bc.

The exemplary flat surfaces 103bb, 103bc are exemplarily integrated in the rim 102e and do not protrude from the rim 102e. However, it is conceivable that exemplary flat surfaces 103bb, 103bc could also be implemented via the use of protrusions in rim 102e and that exemplary flat surfaces 103ab, 103ac of sleeve 102a are integrated into the rim 102d of sleeve 102a.

Similar to sleeve 102a, the two exemplary flat surfaces 103bb, 103bc of sleeve 102b are arranged on opposing sides on the rim 102e, wherein the exemplary flat surfaces 103bb, 103bc are arranged such that the axis 113b connecting a center point of the two flat surfaces 103bb, 103bc is orthogonal to the mating direction with an/the external ferrule (not shown) and also orthogonal to the axis 112 connecting the sleeves 102a, 102b of the coupling portion 102.

For completeness, it is further noted that in this zoom of part of Fig. 1a, also the reference signs for the casing 101, the bridge 102c, the hole 104, the fiducial 106b, and the optical elements 105a, 105b have been marked for an easier understanding of this depicted zoomed part of Fig. 1a in relation to the whole transceiver 100 shown in Fig. 1a.

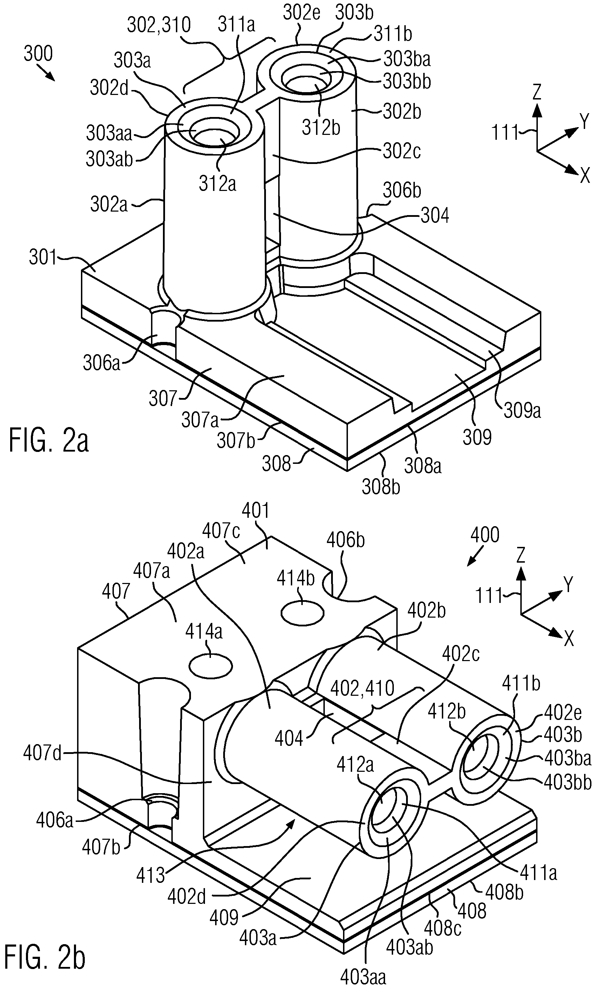

**Fig. 2a** exemplarily shows an exemplary surface-mountable integrated optical transceiver 300 with an exemplary vertical physical contact optical interface 310.

This exemplary transceiver 300 comprises an exemplary base part 307 and an exemplary coupling portion 302 that is exemplarily configured as exemplary vertical physical contact optics interface 310.

Said exemplary coupling portion 302 is configured for coupling to an external ferrule (not shown) of an external plug connector (not shown).

Similar to the transceiver 100 of Fig. 1, the coupling portion 302 of transceiver 300 comprises two exemplary vertically oriented sleeves 302a, 302b that exemplary protrude vertically from the base part 307, e.g. from the top surface 307a of the base part 307. The sleeves 302a, 302b have an exemplary cylindrical shape, but other sleeve shapes are possible too.

The shown exemplary sleeves 302a, 302b have the same length, but it is also possible that they can have different lengths.

The exemplary sleeves 302a, 302b can be connected by an exemplary bridge 302c which can comprise a hole 304 for facilitating mounting the transceiver to a plug connector (not shown).

For example, said hole 304 may facilitate mounting a center of the board plug (not shown) to the transceiver 300. This possible plug can further comprise or provide a mechanism, e.g. a latch mechanism, for keeping an/the external ferrule of the plug connector (not shown) in contact with the coupling portion 302 of the transceiver 300.

The vertical orientation of the sleeves 302a, 302b is exemplarily illustrated as being aligned with or parallel to the exemplary Z-axis of the exemplary orthogonal reference coordinate system 111 spanned by the exemplary X-, Y- and Z-axes. In the example, the bottom surface 307b of the base part 307 and the substrate 308 are configured and oriented such that they lie parallel to the plane spanned by the X- and Y-axes of the coordinate system 111.

In this example, the coupling or mating direction with an/the external ferrule (not shown) of an/the external plug connector (not shown) can lie along or parallel to the Z-axis.

The exemplary vertically oriented sleeves 302a, 302b each comprise exemplary alignment portions 303a, 303b that comprise alignment surfaces 303aa, 303ab, 303ba, 303bb.

The exemplary alignment portions 303a, 303b represent exemplary external alignment portions that are exposed to the surroundings of the sleeves 302a, 302b and that are arranged at or near the rims 302d, 302e of the sleeves 302a, 302b that face towards the external ferrule (not shown).

Said exemplary external alignment portions 303a, 303b each comprise an alignment surface 311a, 311b that comprises two chamfers 303aa, 303ab, 303ba, 303bb.

For example, the alignment surface 311a of alignment portion 303a of sleeve 302a comprises chamfers 303aa, 303ab and the alignment surface 311b of alignment portion 303b of sleeve 302b comprises chamfers 303ba, 303bb

The sleeves 302a, 302b can further each comprise an internal alignment portion 312a, 312b that is connected to the respective external alignment portions 303a, 303b but is arranged further inside the sleeves 302a, 302b.

Said internal alignment portions 312a, 312b can each comprise a cylindrical surface in combination with a flat surface (not shown) with a central opening (not shown), wherein said flat surface represents a bottom end or base of the cylindrical surface that lies within the inside of the respective sleeve 302a, 302b.

Said central openings (not shown) at the bottom end or base of the cylindrical surface of the internal alignment portions 312a, 312b are configured for accommodating an optical path, i.e. for allowing transmission of optical signals to optical fibers and/or reception of optical signals from optical fibers from an external ferrule (not shown) of an external plug connector (not shown).

Said central openings (not shown) at the bottom end or base of the cylindrical surface of the internal alignment portions 312a, 312b can further comprise or accommodate or be connected to one or more optical elements (not shown), e.g. a lens or reflector.

The exemplary substrate 308 can be similar or identical to the substrates 108, 208 from the transceivers 100, 200 of Figs. 1a and 1b.

The bottom surface 307b of the base part 307 of the casing 301 is mounted to an exemplary top surface 308a of the exemplary substrate 308.

Hence, the coupling portion 302, e.g. via said exemplary central openings of the internal alignment portions 312a, 312b, can provide two optical paths in and out of the transceiver 300, wherein said two optical paths can lead to and/or from the top surface 308a of the exemplary substrate 308.

Said exemplary top surface 308a of the exemplary substrate 308 can comprise at least one electronic integrated circuit; in particular, at least one electronic integrated circuit and at least two photonic components (not shown) which can couple to said exemplary optical paths.

The topology or surface profile of the top surface 307a of the shown base part 307 is exemplary only, i.e. other topologies or surface profiles that allow a vertical orientation of the coupling portion 302 are conceivable too.

Stated differently, the illustrated substantially box-shaped base part 307 of the casing 301 is exemplary only.

In the shown example, the coupling portion 302 is exemplarily exposed on all lateral sides, thereby providing an exemplary scoop-proof/Kojiri-safe configuration.

This can enable using a protective shroud around the ferrule of the plug connector (not shown), protecting the ferrule inside the connector plug from accidental damage in the unmated state.

Additionally, when the coupling portion 302 of the transceiver 300 and an/the external ferrule are in a mating position, the connection between the coupling portion 302 of the transceiver 300 and an/the external ferrule can be protected from accidental unmating or damage.

In addition or alternatively, said possible center of the board plug (not shown) that can be attached via the hole 304 to the transceiver can provide protection from unwanted or accidental demating.

In the shown example, the top surface 307a of the base part 307 further comprises an exemplary recess region 309, wherein the thickness of the base part 307 is lower than the thickness of the base part regions surrounding the at least one recess region 309.

Herein, the thickness can exemplarily refer to a thickness measured along the Z-axis of coordinate system 111.

The top surface 307a of the base part 307 of the casing 301 can also comprise at least one hole (not shown) configured for providing a low thermal resistance contact path to the substrate, e.g. to the at least one integrated circuit on the substrate. Said at least one hole can be filled with a thermally conductive medium to improve heat dissipation efficiency.

The shape of the exemplary recess region 309 differs from the shape of the exemplary recess regions 109, 209 illustrated in Figs. 1a and 1b, in that the exemplary recessed region 309 is formed by a stepped transition 309a with two steps starting from the top surface 307a of the base part 307 down to the planar bottom of the recessed 309.

However, it also possible that the exemplary recess region 309 has the same shape or same topology as the exemplary recess regions 109, 209 of the base parts of transceivers 100, 200 illustrated in Figs. 1a and 1b.

Furthermore and similar to the casing 101, 201 of the transceivers 100, 200, the casing 301 has two exemplary lateral recesses 306a, 306b on opposing sides of the casing 301 that can act as fiducials to aid in aligning the bottom surface 307b of the base part 307 of the casing and the top surface 308a of the substrate to each other during manufacturing of the transceiver 300.

**Fig. 2b** exemplarily shows an exemplary surface-mountable integrated optical transceiver 400 with an exemplary horizontal physical contact optical interface 410.

This exemplary transceiver 400 comprises an exemplary base part 407 and an exemplary coupling portion 402 that is exemplarily configured as exemplary horizontal physical contact optics interface 410.

Said exemplary coupling portion 402 is configured for coupling to an external ferrule (not shown) of an external plug connector (not shown).

The coupling portion 402 comprises two exemplary horizontally oriented sleeves 402a, 402b that exemplarily protrude horizontally from the base part 407.

The shape and configuration of the coupling portion 402 can be similar or identical to the coupling portion 302 of the transceiver 400 of Fig. 2a, with the only difference being the horizontal orientation instead of the vertical orientation.

Instead of protruding vertically from the top surface 407a of the base part 407, the coupling portion 402 and its sleeves 402a, 402b can protrude from a lateral side 407d of an exemplary base part protrusion 407c.

The shape, e.g. box shape, of the exemplary base part protrusion 407c is exemplary only, i.e. other shapes that allow for a horizontal orientation of the coupling portion 402 and its sleeves 402a, 402b are possible too.

The sleeves 402a, 402b have an exemplary cylindrical shape, but other sleeve shapes are possible too.

Aside from the different orientation, the sleeves 402a, 402b can be similar or identical to the sleeves 302a, 302b of transceiver 300 from Fig .2a.

The exemplary sleeves 402a, 402b have the same length. However, it is also possible that the sleeves 402a, 402b can have different lengths.

As further exemplarily illustrated, the exemplary sleeves 402a, 402b can be connected by an exemplary bridge 402c, which can comprise a hole 404 for facilitating mounting of a plug connector (not shown).

For example, said hole 404 may facilitate mounting a center of the board plug (not shown) to the transceiver. This possible plug can further comprise or provide a mechanism, e.g. a latch mechanism, for keeping an/the external ferrule of the plug connector (not shown) in contact with the coupling portion 402 of the transceiver 400.

The horizontal orientation of the sleeves 402a, 402b is exemplarily illustrated as being aligned with or parallel to the exemplary X-axis of the exemplary orthogonal reference coordinate system 111 spanned by the exemplary X-, Y- and Z-axes.

In the example, the bottom surface 407b of the base part 407 and the substrate 408 are configured and oriented such that they lie parallel to the plane spanned by the X- and Y-axes of the coordinate system 111.

In this example, the coupling or mating direction with an/the external ferrule (not shown) of an/the external plug connector (not shown) can lie along or parallel to the X-axis.

As indicated further above, aside from the different orientation, the coupling portion 402 and coupling interface 410 can be similar or identical to the coupling portion 302 and the coupling interface 310 of the transceiver 300 from Fig. 2a.

In particular, the sleeves 402a, 402b can be similar or identical to the sleeves 302a, 302b of the transceiver 300 from Fig. 2a.

The exemplary horizontally oriented sleeves 402a, 402b each comprise exemplary alignment portions 403a, 403b that comprise alignment surfaces 403aa, 403ab, 403ba, 403bb.

Said alignment portions 403a, 403b and alignment surfaces 403aa, 403ab, 403ba, 403bb can be similar or identical to the alignment portions 303a, 303b and alignment surfaces 303aa, 303ab, 303ba, 303bb of the transceiver 300 of Fig. 2a.

The exemplary alignment portions 403a, 403b represent exemplary external alignment portions that are exposed to the surroundings of the sleeves 402a, 402b and that are arranged at or near the rims 402d, 402e of the sleeves 402a, 402b that face towards the external ferrule (not shown).

Said exemplary external alignment portions 403a, 403b each comprise an alignment surface 411a, 411b that comprises two chamfers 403aa, 403ab, 403ba, 403bb that are similar or identical to the chamfers 303aa, 303ab, 303ba, 303bb of the transceiver 300 of Fig. 2a.

For example, the alignment surface 411a of alignment portion 403a of sleeve 402a comprises chamfers 403aa, 403ab and the alignment surface 411b of alignment portion 403b of sleeve 402b comprises chamfers 403ba, 403bb.

The sleeves 402a, 402b can further each comprise an internal alignment portion 412a, 412b that is connected to the respective external alignment portions 403a, 403b but that is arranged further inside the sleeves 402a, 402b.

Said internal alignment portions 412a, 412b can each comprise a cylindrical surface in combination with a flat surface (not shown) with a central opening (not shown), wherein said flat surface represents a bottom end or base of the cylindrical surface that lies within the inside of the respective sleeve 402a, 402b.

Said central openings (not shown) at the bottom end or base of the cylindrical surface of the internal alignment portions 412a, 412b are configured for accommodating an optical path, i.e. for allowing transmission of optical signals to optical fibers and/or reception of optical signals from optical fibers from an external ferrule (not shown) of an external plug connector (not shown).

Said central openings (not shown) at the bottom end or base of the cylindrical surface of the internal alignment portions 412a, 412b can further comprise or accommodate or be connected to one or more optical elements (not shown), e.g. a lens or reflector.

The exemplary substrate 408 can be similar or identical to the substrates 108, 208, 308 from the transceivers 100, 200, 300 of Figs. 1a, 1b and 2a.

The bottom surface 407b of the base part 407 of the casing 401 is mounted to an exemplary top surface 408a of the exemplary substrate 408.

Hence, the coupling portion 402, e.g. via said exemplary central openings of the internal alignment portions 412a, 412b, can provide two optical paths in and out of the transceiver 400, wherein said two optical paths can lead to and/or from the top surface 408a of the exemplary substrate 408.

Said exemplary top surface 408a of the exemplary substrate 408 can comprise at least one electronic integrated circuit. For example, the top surface 408a of the exemplary substrate 408 can comprise at least one electronic integrated circuit and at least two photonic components (not shown) which can couple to said exemplary optical paths.

The topology or surface profile of the top surface 407a of the shown base part 407 is exemplary only, i.e. other topologies or surface profiles that allow a horizontal orientation of the coupling portion 402 are conceivable too.

Stated differently, the illustrated substantially box-shaped protrusion 407c of the base part 407 of the casing 401 with optional recesses 406a, 406b and optional holes 414a, 414b and optional undercut 413 is exemplary only.

In the shown example, the coupling portion 402 is exemplarily exposed by the exemplary undercut 413, which exposes the coupling portion 402 above, below and laterally on two sides, thereby providing an exemplary scoop-proof/Kojiri-safe configuration.

This can enable using a protective shroud around the ferrule of the plug connector (not shown), protecting the ferrule inside the connector plug from accidental damage in the unmated state.

Additionally, when the coupling portion 402 of the transceiver 400 and an/the external ferrule are in a mating position, the connection between the coupling portion 402 of the transceiver 400 and an/the external ferrule can be protected from accidental unmating or damage.

In addition or alternatively, said possible center of the board plug (not shown) that can be attached via the hole 404 to the transceiver can provide protection from unwanted or accidental demating.

In the shown example, the base part 407 can further comprise a recess (not shown) on region 409, wherein the thickness of the base part 407 is lower than the thickness of the base part regions surrounding the at least one recess region (not shown).

Herein, the thickness can exemplarily refer to a thickness measured along the Z-axis of coordinate system 111.

The region 409 of the top surface of the base part 407 of the casing 401 can also comprise at least one hole (not shown) configured for providing a low thermal resistance contact path to the substrate, e.g. to the at least one integrated circuit on the substrate. Said at least one hole can be filled with a thermally conductive medium to improve heat dissipation efficiency.

The exemplary region 409 can be similar or identical to the regions 109, 209 of the transceivers 100, 200 or can be similar or identical to the region 309 of transceiver 300.

However also other shapes for the region 409 are possible too.

In the shown example, the casing 401 has two lateral recesses 406a, 406b on opposing sides of the casing 401 that can act as fiducials to aid in aligning the bottom surface 407b of the base part 407 of the casing and the top surface 408a of the substrate to each other during manufacturing of the transceiver 400.

The casing 401 can further comprise two exemplary holes 414a, 414b that are exemplarily arranged in the protrusion 407c and that can facilitate integrating a reflector or mirror in the optical paths inside the casing. This possible reflector or mirror can facilitate total internal reflection of the optical signals along the optical paths, e.g. the optical signal input beam and/or the optical signal output beam, for the case that the optical path traverses an optically transparent casing material.

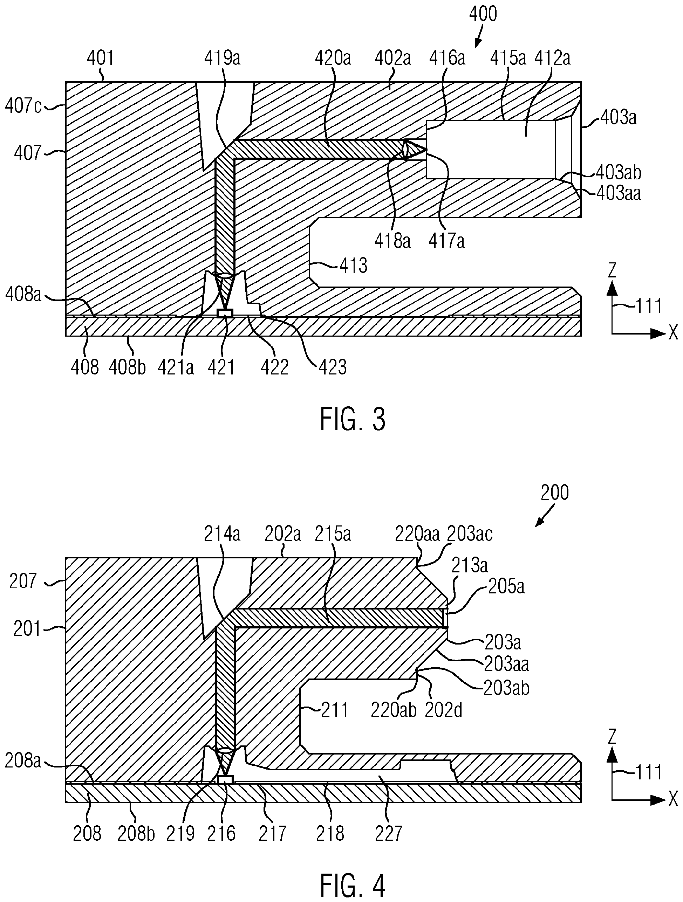

**Fig. 3** exemplarily shows an exemplary side cross-section of the surface-mountable integrated optical transceiver 400 with horizontal physical contact optical interface 410 of Fig. 2b along the side of sleeve 402a, i.e. along an axis parallel to the X-axis of coordinate system 111.

This exemplary cross-section allows a better understanding of the exemplary dual chamfer configurations of the external alignment portions and the exemplary internal alignment portions of transceiver 400 of Fig. 2b. It is to be noted that the following description also applies to the structure of the sleeve 402b of transceiver 400, which can be similar or identical to sleeve 402a.

Fig. 3 allows a better view of the external alignment portion 403a of sleeve 402a comprising exemplary chamfers 403aa, 403ab with different slopes, i.e. with different exemplary chamfer angles.

Said external alignment portion 403a of sleeve 402a can be similar or identical to the external alignment portion 403b of sleeve 402b, which is not visible in this shown cross-section.

Fig. 3 further allows a better view of the internal alignment portion 412a inside of sleeve 402a and which comprises a cylindrical surface 415a in combination with a flat surface 416a with a central opening 417a, wherein said flat surface 416a represents a bottom end or base of the cylindrical surface 415a that lies within the inside of sleeve 402a.

This internal alignment portion 412a inside of sleeve 402a can be similar or identical to the internal alignment portion 412b of sleeve 402b which is not visible in this shown cross-section.

As previously indicated, the chamfer angle with respect to the sleeve's longitudinal axis of the chamfer 403aa arranged closer to the rim of the sleeve 402a can be in the range of 30 to 60 degrees and the chamfer angle of the chamfer 403ab arranged further from the rim of the sleeve 402a can be in the range of 5 to 20 degrees. However, other chamfer topologies are possible too.

The two chamfers could be integrated in a continuous chamfer-like shape where the chamfer angle varies continuously from a stepper angle at the entrance or rim of the sleeve 402a to a smaller angle where the chamfer meets the internal cylindrical surface 415a of the internal alignment portion 412a.

The central opening 417a in the internal alignment portion 412a further accommodates or is connected to an optical element 418a, e.g. a lens, that can transmit optical signals via the opening 417a to an/the external ferrule (not shown) that can be mated to the coupling portion 402a of the transceiver 400 and/or that can receive optical signals via the opening 417a from an/the external ferrule (not shown) that can be mated to the coupling portion 402a of the transceiver 400.

The reference sign 420a marks an exemplary (first) optical path inside the transceiver 400 that can be configured as input optical path for receiving optical signals from an/the external ferrule (now shown) of a plug connector (not shown) via sleeve 402a and/or as output optical path for transmitting optical signals to an/the external ferrule (not shown) of a plug connector (not shown) via sleeve 402a.

The other exemplary (second) optical path of the transceiver via sleeve 402b is not visible here but can be similar or identical to the optical path 420a.

The transceiver 400 further comprises an exemplary optical element 419a, e.g. a reflector or mirror, for controlling the optical path 420a inside the transceiver 400.

In the present exemplary case, the optical element 419a redirects the direction of the optical path 420a by 90° in order provide an optical path via the opening 417a inside the sleeve 402a to and from the substrate 408, in particular to the exemplary photonic component(s) 421, e.g. photo diode (PD) or laser diode, e.g. VCSEL, and/or exemplary electronic component(s) 422 and/or exemplary integrated circuit 423 mounted to the top surface 408a of the substrate 408.

A similar or identical optical element (not shown) can control the optical path (not shown) of the transceiver via sleeve 402b (not shown), wherein the second optical path (not shown) also provides an optical path to and from the substrate 408 in a similar way, e.g. said not shown second optical path can provide an optical path from sleeve 402b to exemplary photonic components and/or electronic components that can be identical or similar to the shown exemplary photonic component(s) 421 and/or the exemplary shown electronic component(s) 422 and/or the exemplary integrated circuit 423.

The reference sign 421a denotes an exemplary optical element, e.g. a lens, that couples the light path 420a to the substrate 408, in particular to the exemplary photonic component(s) 421, or that can receive light from said exemplary photonic component(s).

The topology of the top surface 408a and the arrangement of the exemplary photonic components 421 and/or the exemplary shown electronic components 422 and/or the exemplary integrated circuit 423 is exemplary only. For example, it is possible that the exemplary integrated circuit 423 comprises the photonic component(s) 421 and/or the electronic component(s) 422.

For completeness, it is noted that in the case of the exemplary surface-mountable integrated optical transceiver 300 with an exemplary vertical physical contact optical interface 310 shown in Fig. 2a, the optical paths inside the transceiver 300 do not require an optical element, e.g. a reflector or mirror, for redirecting the direction of the optical path by 90°.

The external alignment portions 303a, 303b and internal alignment portions 312a, 312b of transceiver 300 can be similar or identical to the external alignment portions 403a, 403b and internal alignment portions 412a, 412b of transceiver 400.

In the vertical configuration of transceiver 300, the optical paths provided by the central openings of the internal alignment portions 312a, 312b can be coupled directly to photonic components and/or to electronic components and/or integrated circuits on the substrate 308, without the need for redirecting the direction of the optical path by 90°.

The topology of possible photonic components and/or electronic components and/or integrated circuits on the substrate 308 of transceiver 300 can be identical or similar to the topology of the exemplary photonic components 421 and/or electronic components 422 and/or integrated circuits 423 on the substrate 408 of transceiver 400.

For completeness, it further noted that also reference signs for the casing 401, the base part 407, the protrusion 407c, the bottom surface 408b of the substrate 408 of the transceiver 400 and the undercut 413 are marked in Fig.3 for reference.

It is further noted, that a possible header and plug (not shown) attachable to the transceiver 400 may be configured, for pressing the mating end of the fiber from the ferrule (not shown) of the plug against the flat surface 416a thereby improving the coupling stability and optical performance. Said possible header (not shown) may be attached to the printed circuit board surface to which the transceiver can be mounted and may accommodate the transceiver.

**Fig. 4** exemplarily shows an exemplary side cross-section of the surface-mountable integrated optical transceiver 200 with horizontal expanded beam optics interface 210 of Fig. 1b along the side of sleeve 202a, i.e. along an axis parallel to the X-axis of coordinate system 111.

It is to be noted that the following description also applies to the structure of the sleeve 202b of transceiver 200, which, aside from having a different length to sleeve 202a, e.g. a greater length, can be similar or identical to sleeve 202a.

This exemplary cross-section allows a better understanding of the exemplary interior configuration of the exemplary transceiver 200 and also provides a better understanding of the possible exemplary protrusions 220ab, 220aa that are arranged on the rim 202d of sleeve 202a and that can provide or comprise the flat surfaces 203ab, 203ac of the alignment portion 203a.

Further illustrated is the exemplary convex conical surface or cone 203aa that, together with said flat surfaces 203ab, 203ac, can form an exemplary alignment surface of the alignment portion 203a.

In particular, Fig. 4 allows a better understanding of the exemplary (first) optical path 215a inside the transceiver 200 via sleeve 202a. The other exemplary (second) optical path of the transceiver via sleeve 202b is not visible here but can be similar or identical to the optical path 215a.

The apex 213a of cone 203aa can comprise an exemplary optical element 205a, e.g. a lens, for receiving, e.g. via free space, an optical signal from an/the external ferrule (not shown) of a plug connector (not shown) and/or for transmitting, e.g. via free space, an optical signal from the transceiver 200 to an/the external ferrule (not shown) of a plug connector (not shown).

The transceiver 200 further comprises an exemplary optical element 214a, e.g. a reflector or mirror, for controlling the optical path 215a inside the transceiver 200.

In the present exemplary case, the optical element 214a redirects the direction of the optical path 215a by 90° in order provide an optical path via the sleeve 202a to and from the substrate 208, in particular to the exemplary photonic component(s) 216, e.g. photo diode (PD) or laser diode, e.g. VCSEL, and/or exemplary electronic component(s) 217 and/or exemplary integrated circuit 218 mounted to the top surface 208a of the substrate 208.

A similar or identical optical element (not shown) can control the optical path (not shown) of the transceiver via sleeve 202b (not shown), wherein the second optical path (not shown) also provides an optical path to and from the substrate 208 in a similar way, e.g. said not shown second optical path can provide an optical path from sleeve 202b to exemplary photonic components and/or electronic components that can be identical or similar to the shown exemplary photonic component(s) 216 and/or the exemplary shown electronic component(s) 217 and/or the exemplary integrated circuit 218.

The reference sign 219 denotes an exemplary optical element, e.g. a lens, that couples the light path 215a to the substrate 208, in particular to the exemplary photonic component(s) 216, or that can receive light from said exemplary photonic component(s).

The topology of the top surface 208a and the arrangement of the exemplary photonic components 216 and/or the exemplary shown electronic components 217 is exemplary only. For example, it is possible that the exemplary integrated circuit 218 comprises the photonic component(s) 216 and/or the electronic component(s) 217.

For completeness, it is noted that in the case of the exemplary surface-mountable integrated optical transceiver 100 with an exemplary vertical expanded beam optics interface shown in Fig. 1a, the optical paths inside the transceiver 100 do not require an optical element, e.g. a reflector or mirror, for redirecting the direction of the optical path by 90°.

The alignment portions 203a, 203b of transceiver 200 can be similar or identical to the external alignment portions 103a, 103b of transceiver 100.

In the vertical configuration of the transceiver 100, the optical paths provided by the respective apices of cones 103aa and 103ba can be directly coupled to photonic components, electronic components, and/or integrated circuits on the substrate 108, without requiring a 90° redirection of the optical path.

The optical paths illustrated in Fig. 3 and Fig. 4 are exemplary only. Accordingly, other optical path trajectories within any of the above-described transceivers that differ from the optical paths shown in Fig.3 and Fig.4 are also possible.

As previously indicated the exemplary optical paths 420a, 215a can inter alia refer to optical paths in a plurality of physical optical media, e.g. air and/or glass and/or a polymer, and/or to optical paths in fibers or fiber-based optical paths. However, preferably, said at least two optical paths 420a, 215a to and from the top surface 408a, 208a of the substrate can be fiber-free optical paths through air or free-space and/or through optical materials.

In particular, the optical paths 420a, 215a may comprise optical materials that are identical or similar to the transparent material(s) forming the casing of the transceiver. Stated differently, the optical paths can be partially or fully integrated into the casing material.

For completeness, it further noted that also reference signs for the casing 201, the base part 207, the bottom surface 208b of the substrate 208 of the transceiver 200 and the undercut 211 are marked in Fig. 4 for reference.

It is further noted, that a possible header and plug (not shown) attachable to the transceiver 200 may be configured for pressing the mating end of the ferrule of the plug (not shown) against the flat surfaces 203ab, 203ac, thereby improving the coupling stability and optical performance. Said possible header (not shown) may be attached to the printed circuit board surface to which the transceiver can be mounted and may accommodate the transceiver.

The reference numeral 227 marks an exemplary internal cavity of the base part 207 that can accommodate all exemplary photonic component(s) 216, all exemplary electronic component(s) 217 and the exemplary integrated circuit 218 mounted to the top surface 208a of the substrate 208.

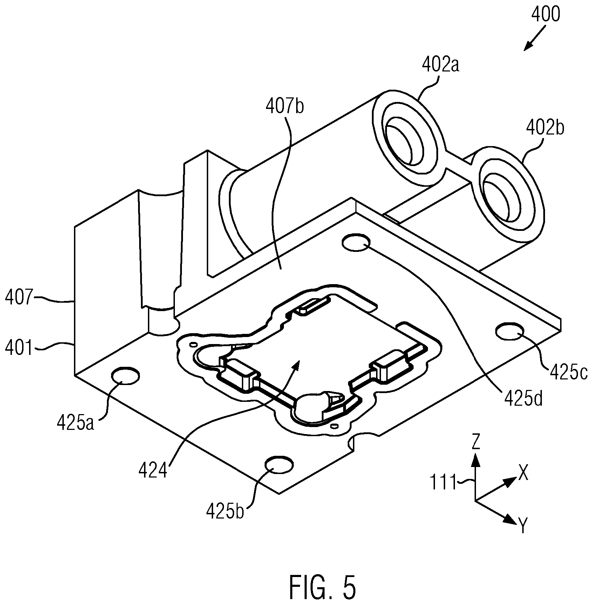

Fig. 5 shows a further example of a possible recess or internal cavity 424 in the bottom surface 407b of the base part 407 of the casing 401 of the transceiver 400.

Said possible recess or internal cavity 424 can be configured to accommodate the at least one integrated circuit 423 of the substrate 408 (not shown) of the transceiver 400; in particular, said recess or internal cavity 424 can also accommodate all of the electronic and photonic components 421, 422 of the transceiver 400.

The recess 424 can have a size and shape that are conformal to the size and shape of the at least one integrated circuit 423 and/or conformal to the size and shape of all of the electronic and photonic components 421, 422 mounted to the substrate 408 of the transceiver 400.

Furthermore, the recess 424 may comprise at least one vent or conduit configured to vent gas from the environment of the at least one integrated circuit 423 to the environment of the surface-mountable integrated optical transceiver.

It is noted that while this example is shown in the context of transceiver 400, any of the other described transceivers 100, 200, 300 may comprise a bottom surface of the base part of the casing similar or identical to the shown exemplary bottom surface 407b.

Stated differently, any of the above described transceivers may comprise a base part of the casing having a bottom surface that comprises a recess or internal cavity that can act as conformal cover or lid that covers the at least one integrated circuit of the substrate; in particular, that can cover all of the electronic and photonic components of the transceiver. Also any of the above described transceivers may comprise a recess or internal cavity with a vent or conduit configured to vent gas from the environment of the at least one integrated circuit to the environment of the surface-mountable integrated optical transceiver.

Fig. 5 further shows exemplary legs 425a, 425b, 425c, 425d for controlling the distance between the bottom surface 407b of the base part 407 and the substrate 408 during assembly.

Again, the shown exemplary leg configuration is not limited to the transceiver 400. Any of the above-described transceivers may comprise a base part of the casing with a bottom surface that has legs similar or identical to the legs 425a, 425b, 425c, 425d exemplarily illustrated in Fig. 5.

For completeness, it is further noted that also reference signs for the casing 401 and sleeves 402a, 402b are marked in Fig. 5 for reference.

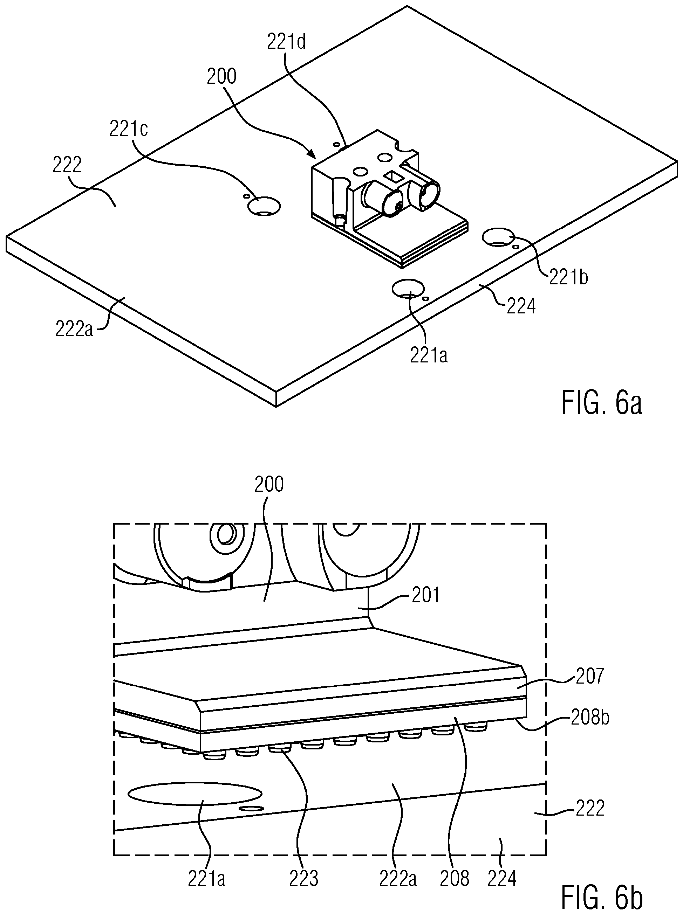

**Fig. 6a** shows an example of transceiver 200 mounted to the top surface 222a of an exemplary printed circuit board 222, in particular close to an edge 224 of the printed circuit board 222.

The shown configuration is exemplary only and not limited to the transceiver 200, i.e. any other above described transceiver, e.g. transceiver 100 or 300 or 400, could be mounted in a similar way to the printed circuit board 222. For completeness, it is noted that in this exemplary illustrated configuration, the optional recess 209 of transceiver 200 has been omitted from the figure.

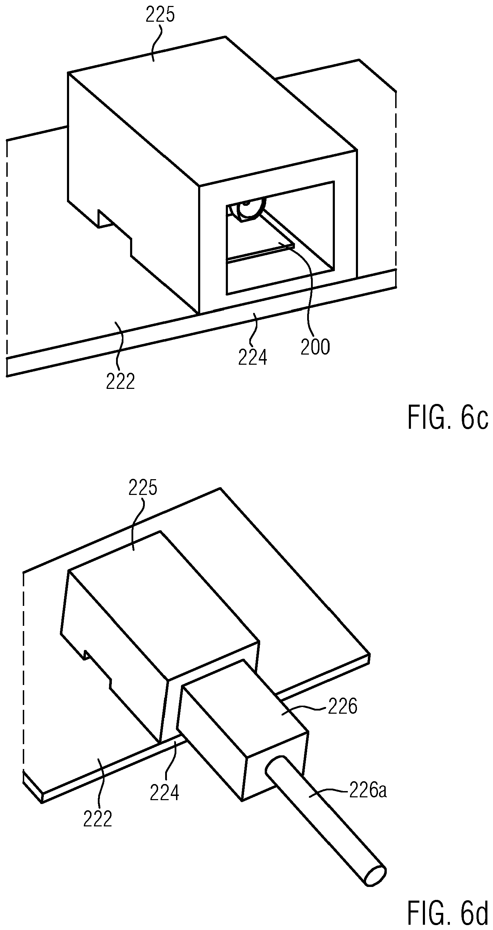

The exemplary printed circuit board 222 comprises a plurality of exemplary holes 221a, 221b, 221c, 221d that can be used to facilitate the mounting of a header (not shown here but in Fig. 6c and Fig. 6d) to the transceiver and the printed circuit board 222.

**Fig. 6b** shows an exemplary zoom of Fig. 6a around hole 221a that shows part of the base part 207 of the casing 201 of transceiver 200 and which also shows an exemplary array of solder contacts 223 arranged on the bottom surface 208b of the substrate 208 of the transceiver 200 via which the transceiver 200 can establish an electrical connection between the transceiver and the printed circuit board; in particular, between the electronic and photonic components mounted to the top surface of the substrate 208 and the printed circuit board 222.

**Fig. 6c** shows an example of a header 225 attached to the transceiver 200 mounted on the printed circuit board 222 of Fig. 6a, wherein the header 225 can be mounted to the printed circuit board 222 via holes 221a, 221b, 221c, 221d.

**Fig. 6d** shows an example of a plug connector 226 with a ferrule (not shown) connected to the transceiver 200 inside the header 225 at the edge 224 of printed circuit board 222.

The plug connector 226 may be also additionally mounted to the header 225 via a latch mechanism (not shown) for keeping the ferrule of the plug connector in contact with the coupling portion of the transceiver 200 (the transceiver is not visible here but in Fig 6c).

The reference sign 226a exemplarily marks a multi-mode optical fiber cable of the plug connector 226 which can carry optical signals to and from the transceiver 200.

It is once again noted that the exemplary configurations of Figs. 6a, 6b, 6c and 6d are not limited to the transceiver 200. Any other above-described transceiver, e.g. transceiver 100 or 300 or 400, may be mounted to a printed circuit board and can be connected to a plug connector 226 with a ferrule in a similar way, either at the edge of a printed circuit board, at the center of a printed circuit board or at other positions on a printed circuit board.

Followed by Figures 1a, 1b, 2a, 2b, 3, 4, 5, 6a, 6b, 6c and 6d, wherein the reference numerals identify the following exemplary and optional components.
100 surface-mountable integrated optical transceiver
   with vertical expanded beam optics interface
101 casing
102 coupling portion
102a (first) sleeve
102b (second) sleeve
102c bridge
102d rim
102da protrusion in rim 102d
102db protrusion in rim 102d
102e rim
103a alignment portion
103b alignment portion
103aa alignment surface, e.g. convex conical surface, cone
103ab alignment surface, e.g. flat surface
103ac alignment surface, e.g. flat surface
103ba alignment surface, e.g. concave conical surface, cone
103bb alignment surface, e.g. flat surface
103bc alignment surface, e.g. flat surface
104 hole or aperture or recess
105a optical element, e.g. lens
105b optical element, e.g. lens
106a fiducial, e.g. lateral recess in casing
106b fiducial, e.g. lateral recess in casing
107 base part
107a top surface of base part
107b bottom surface of base part
108 substrate
108a top surface of substrate
108b bottom surface of substrate
109 recess/recess region in top surface of base part
110 vertical expanded beam optics interface
111 orthogonal reference coordinate system spanned by X-, Y- and Z-axis
112 (virtual) line/axis connecting sleeves 102a, 102b
113a (virtual) line/axis connecting center points of flat surfaces 103ab, 103ac
113b (virtual) line/axis connecting center points of flat surfaces 103bb, 103bc
200 surface-mountable integrated optical transceiver with horizontal expanded beam optics interface
201 casing
202 coupling portion
202a (first) sleeve
202b (second) sleeve
202c bridge
202d rim
202e rim
203a alignment portion
203b alignment portion
203aa alignment surface, e.g. convex conical surface, cone
203ab alignment surface, e.g. flat surface
203ac alignment surface, e.g. flat surface
203ba alignment surface, e.g. concave conical surface, cone
203bb alignment surface, e.g. flat surface
203bc alignment surface, e.g. flat surface
204 hole or aperture or recess
205a optical element, e.g. lens
205b optical element, e.g. lens
206a fiducial, e.g. lateral recess in casing
206b fiducial, e.g. lateral recess in casing
207 base part
207a top surface of base part
207b bottom surface of base part
207c protrusion
207d lateral side of protrusion 207c
208 substrate
208a top surface of substrate
208b bottom surface of substrate
209 recess/recess region in top surface of base part
210 horizontal expanded beam optics interface
211 undercut
212a hole for integration of optical elements
212b hole for integration of optical elements
213a apex of cone 203aa
214a optical element, e.g. reflector
215a optical path
216 photonic component or plurality of photonic components
217 electronic component or plurality of electronic components
218 integrated circuit, e.g. electronic integrated circuit or photonic integrated circuit
219 optical element, e.g. lens
220aa protrusion in rim 202d
220ab protrusion in rim 202d
221a, 221b, 221c, 221d holes in printed circuit board surface
222 printed circuit board
222a top surface of printed circuit board
223 solder contacts, e.g. array of solder contacts, e.g. array of solder balls or array of solder pads
224 edge of printed circuit board
225 header
226 plug connector with ferrule
226a optical fiber cable of plug connector, e.g. multi-mode optical fiber cable
227 internal cavity or recess of bottom surface of base part of the casing
300 surface-mountable integrated optical transceiver
   with vertical physical contact optical interface
301 casing
302 coupling portion
302a (first) sleeve
302b (second) sleeve
302c bridge
302d rim
302e rim
303a external alignment portion
303b external alignment portion
303aa alignment surface, (first) chamfer
303ab alignment surface, (second) chamfer
303ba alignment surface, (first) chamfer
303bb alignment surface, (second) chamfer
304 hole
306a fiducial, e.g. lateral recess in casing
306b fiducial, e.g. lateral recess in casing
307 base part
307a top surface of base part
307b bottom surface of base part
308 substrate
308a top surface of substrate
308b bottom surface of substrate
309 recess / recess region in top surface of base part
309a step transition
310 vertical physical contact optical interface
311a alignment surface
311b alignment surface
312a internal alignment portion
312b internal alignment portion
400 surface-mountable integrated optical transceiver
   with vertical physical contact optical interface
401 casing
402 coupling portion
402a (first) sleeve
402b (second) sleeve
402c bridge
402d rim
402e rim
403a external alignment portion
403b external alignment portion
403aa alignment surface, (first) chamfer
403ab alignment surface, (second) chamfer
403ba alignment surface, (first) chamfer
403bb alignment surface, (second) chamfer
404 hole
406a fiducial, e.g. lateral recess in casing
406b fiducial, e.g. lateral recess in casing
407 base part
407a top surface of base part
407b bottom surface of base part
407c protrusion
407d lateral side of protrusion 407c
408 substrate
408a top surface of substrate
408b bottom surface of substrate
409 region with a possible recess / recess region in top surface of base part
410 vertical physical contact optical interface
411a alignment surface
411b alignment surface
412a internal alignment portion
412b internal alignment portion
413 undercut
414a hole to facilitate integration of optical elements
414b hole to facilitate integration of optical elements
415a cylindrical surface
416a flat surface
417a central opening
418a optical element, e.g. lens
419a optical element, e.g. reflector
420a optical path
421 photonic component or plurality of photonic components
421a optical element, e.g. lens
422 electronic component or plurality of electronic components
423 integrated circuit, e.g. electronic integrated circuit or photonic integrated circuit
424 internal cavity or recess of bottom surface of base part
425a, 425b, 425c, 425d legs

## Claims

1. A surface-mountable, SMT, integrated optical transceiver (100, 200, 300, 400) for multi-mode optical fiber applications, comprising:
a casing (101, 201, 301, 401), wherein the casing comprises a base part and a coupling portion (102, 202, 302, 402), said coupling portion (102, 202, 302, 402) being configured for coupling to an external ferrule, wherein the coupling portion (102, 202, 302, 402) comprises at least one alignment portion comprising at least one alignment surface, and said base part comprising a top surface and a bottom surface;
a substrate comprising a top surface and a bottom surface, said top surface of the substrate comprising at least one integrated circuit, wherein said bottom surface of the substrate is mountable to a printed circuit board surface and wherein the casing (101, 201, 301, 401) is mounted to the top surface of the substrate;
wherein the coupling portion (102, 202, 302, 402) is configured for providing at least two optical paths to and from the substrate; and wherein the at least one alignment surface is configured for aligning the coupling portion and the external ferrule to a mating position.

2. A surface-mountable integrated optical transceiver (100, 200, 300, 400) according to claim 1, wherein the top surface of the substrate comprises at least one electronic integrated circuit, in particular, wherein the top surface of the substrate comprises at least one electronic integrated circuit and at least two photonic components.

3. A surface-mountable integrated optical transceiver (300, 400) according to claim 1, wherein the coupling portion (302, 402) is configured for providing an optical interface for interfacing with the external ferrule of a physical contact connector, and wherein the coupling portion (302, 402) protrudes from the top surface of the base part and comprises at least two sleeves that are oriented vertically or horizontally with respect to the top surface of the base part, wherein the sleeves each comprise at least two alignment portions, an external alignment portion and an internal alignment portion, wherein each alignment portion comprises at least one alignment surface, and wherein the at least one alignment surface of each external alignment portion comprises at least one chamfer, e.g. two chamfers, and wherein the at least one alignment surface of each internal alignment portion comprises at least one flat surface having a central opening and a cylindrical surface.

4. A surface-mountable integrated optical transceiver (100, 200) according to claim 1, wherein the coupling portion (102, 202) is configured for providing an expanded beam optics interface for interfacing with the external ferrule, and wherein the coupling portion (102, 202) protrudes from the top surface of the base part and comprises two sleeves that are oriented vertically or horizontally with respect to the top surface of the base part, wherein each sleeve comprises one alignment portion comprising at least one alignment surface, and wherein the at least one alignment surface of each alignment portion comprises a concave or convex conical surface in combination with at least one flat surface.

5. A surface-mountable integrated optical transceiver (100, 200) according to the preceding claim, wherein the flat surfaces of the alignment surfaces of the alignment portions are configured for providing a minimum clearance between the concave or convex conical surfaces of the alignment surfaces and the external ferrule when the coupling portion (102, 202) and the external ferrule are in a mating position.

6. A surface-mountable integrated optical transceiver (100, 200, 300, 400) according to one of the preceding claims 1 or 2 or 4 or 5, wherein the coupling portion (102, 202, 302, 402) has a hermaphroditic design for mating with an external ferrule having a similar coupling portion design as the coupling portion of the surface-mountable integrated optical transceiver.

7. A surface-mountable integrated optical transceiver (100, 200, 300, 400) according to one of the preceding claims, wherein the coupling portion (102, 202, 302, 402) is oriented vertically or horizontally with respect to the top surface of the base part and wherein the coupling portion is exposed to provide free space around the coupling portion to accommodate a protective shroud around the external ferrule when the coupling portion and the external ferrule are in a mating position, wherein said free space can be provided by the coupling portion comprising an undercut for a horizontally-oriented coupling portion or by the coupling portion being extended in its length for a vertically-oriented coupling portion.

8. A surface-mountable integrated optical transceiver (100, 200, 300, 400) according to one of the preceding claims, the top surface of the base part of the casing comprising at least one recess region, wherein the thickness of the base part is lower than the thickness of the base part regions surrounding the at least one recess region, and/or wherein the top surface of the base part of the casing comprises at least one hole configured for providing a low thermal resistance contact path to the at least one integrated circuit on the substrate.

9. A surface-mountable integrated optical transceiver (100, 200, 300, 400) according to one of the preceding claims, wherein the bottom surface of the base part of the casing comprises a recess configured to accommodate the at least one integrated circuit of the substrate, wherein the recess can have a size and shape that are conformal to the size and shape of the at least one integrated circuit of the substrate.

10. A surface-mountable integrated optical transceiver (100, 200, 300, 400) according to the preceding claim, wherein the recess comprises at least one vent or conduit configured to vent gas from the environment of the at least one integrated circuit to the environment of the surface-mountable integrated optical transceiver.

11. A surface-mountable integrated optical transceiver (100, 200, 300, 400) according to one of the preceding claims, wherein the bottom surface of the base part of the casing comprises a plurality of legs for controlling the distance between the base part and the substrate during assembly.

12. A surface-mountable integrated optical transceiver (100, 200, 300, 400) according to one of the preceding claims, wherein the casing comprises one or more holes for facilitating the connection of a fiber cable connector to the surface-mountable integrated optical transceiver.

13. A surface-mountable integrated optical transceiver (100, 200, 300, 400) according to one of the preceding claims, wherein the coupling portion (102, 202, 302, 402) is configured for providing at least two optical paths to and from the substrate and/or wherein the casing is optically transparent and/or wherein the casing comprises one or more optical elements for controlling the propagation of optical signals inside the transceiver along said optical paths.

14. Coupling portion for a surface-mountable integrated optical transceiver (100, 200, 300, 400) according to one of the preceding claims, wherein the coupling portion (102, 202, 302, 402) is configured for coupling to an external ferrule, and wherein the coupling portion comprises at least one alignment portion comprising at least one alignment surface, and wherein the coupling portion is configured for providing at least two optical paths to and from the surface-mountable integrated optical transceiver.

15. Manufacturing of a surface-mountable integrated optical transceiver (100, 200, 300, 400) according to one of the preceding surface-mountable integrated optical transceiver claims, comprising:
providing the substrate comprising at least one integrated circuit;
providing the casing;
and mounting, e.g. gluing, the bottom surface of the base part of the casing to the top surface of the substrate, wherein the mounting can comprise aligning the bottom surface of the base part of the casing and the top surface of the substrate to each other, wherein said aligning can be carried out with the use of fiducials.
